(19) Europäisches Patentamt
European Patent Office
Office européen des brevets

(11) **EP 3 201 554 B1**

(12) **FASCICULE DE BREVET EUROPEEN**

(45) Date de publication et mention de la délivrance du brevet:
**17.07.2019 Bulletin 2019/29**

(21) Numéro de dépôt: **15770914.8**

(22) Date de dépôt: **29.09.2015**

(51) Int Cl.:
*F28D 17/02* [(2006.01)]   *C04B 35/195* [(2006.01)]
*C09K 5/14* [(2006.01)]   *F27B 3/26* [(2006.01)]
*F27D 1/04* [(2006.01)]   *F28D 20/00* [(2006.01)]

(86) Numéro de dépôt international:
**PCT/EP2015/072359**

(87) Numéro de publication internationale:
**WO 2016/050732 (07.04.2016 Gazette 2016/14)**

(54) **UNITÉ DE STOCKAGE THERMIQUE**

WÄRMESPEICHEREINHEIT

THERMAL STORAGE UNIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.09.2014 FR 1459188**

(43) Date de publication de la demande:
**09.08.2017 Bulletin 2017/32**

(73) Titulaire: **Saint-Gobain Centre de Recherches et
d'Etudes
Européen
92400 Courbevoie (FR)**

(72) Inventeurs:
• **WATREMETZ, Benoit**
  **F-52330 Juzennecourt (FR)**
• **DUPIN, Thierry**
  **F-84000 Avignon (FR)**
• **LEPLAY, Paul**
  **F-84440 Robion (FR)**

(74) Mandataire: **Nony
11 rue Saint-Georges
75009 Paris (FR)**

(56) Documents cités:
DE-B3-102009 020 531   DE-C1- 19 808 810
GB-A- 2 109 026   US-A1- 2008 128 121
US-A1- 2014 000 835   US-A1- 2014 144 603

**Description**

**Domaine technique**

L'invention concerne une unité de stockage thermique, ainsi qu'une installation thermique. US 2014/000835 décrit une unité de stockage thermique comportant un empilement de briques avec des strates. Ce document divulgue une fraction de vide inférieure ou égale à 60 % mais pas une obturation d'ouverture.

**Arrière-plan technologique**

Une installation thermique peut comporter une unité produisant de l'énergie calorifique, un consommateur d'énergie calorifique et une unité de stockage de cette énergie calorifique, de manière à décaler dans le temps sa production et sa consommation.

Le stockage de l'énergie calorifique est également utile pour valoriser les énergies douces, comme l'énergie solaire, renouvelables mais dont la production est intermittente. Le stockage de l'énergie peut également être utile pour tirer profit des écarts de prix de l'électricité entre les heures dites « creuses » durant lesquelles les tarifs de l'électricité sont les moins élevés, et les heures dites « pleines » durant lesquelles les tarifs sont les plus élevés. Par exemple, dans le cas de stockage d'énergie par compression d'air, générant de l'énergie calorifique qui est stockée dans une unité de stockage thermique, les phases de compression consommant de l'électricité sont avantageusement réalisées à moindre coût pendant les heures creuses, tandis que les phases de détente produisant de l'électricité sont réalisées pendant les heures pleines, afin de fournir de l'électricité qui peut être injectée dans le réseau électrique, en fonction de la demande, à un tarif avantageux.

L'énergie calorifique peut être stockée dans des éléments de stockage d'énergie d'une unité de stockage thermique. Les éléments de stockage d'énergie peuvent être en vrac (« média » en anglais) sous la forme d'un lit (« packed bed » en anglais), par exemple un lit de cailloux, ou être empilés de manière ordonnée, classiquement sous la forme d'un empilement de briques.

L'opération de stockage, par échange thermique entre un courant de fluide caloporteur et l'unité de stockage thermique, se nomme classiquement « la charge », le fluide caloporteur entrant dans l'unité de stockage thermique lors de la charge étant appelé « fluide caloporteur de charge ».

La capacité de stockage est notamment dépendante de la quantité de matériau de stockage d'énergie par unité de volume. Typiquement, pour disposer d'une capacité suffisante, la « fraction volumique de vide », c'est-à-dire le rapport entre le volume de vide (espace non occupé par la matière des éléments en vrac ou des briques (en ignorant la porosité de cette matière)) et le volume de l'unité de stockage thermique, est inférieure ou égale à 60%, à la différence des régénérateurs, et en particulier des régénérateurs utilisés dans l'industrie verrière.

L'énergie calorifique stockée peut ensuite être restituée, par échange thermique entre un courant de fluide caloporteur et les éléments de stockage d'énergie. Cette opération se nomme classiquement « la décharge », le fluide caloporteur entrant dans l'unité de stockage thermique lors de la décharge étant appelé « fluide caloporteur de décharge ».

« A review on packed bed solar energy storage systems », Renewable and Sustainable Energy Reviews, 14 (2010), p 1059-1069, décrit l'état de la technique dans le domaine des unités de stockage thermique, et notamment l'influence de certains paramètres sur l'efficacité desdites unités de stockage thermique.

L'efficacité d'une unité de stockage thermique dépend notamment étroitement de sa géométrie et du matériau des éléments de stockage d'énergie mis en oeuvre pour accumuler et restituer l'énergie calorifique. Il existe un besoin permanent pour améliorer cette efficacité et/ou pour réduire le volume de l'unité de stockage thermique à efficacité et quantité de matériau constantes. Ce besoin est d'autant plus sensible que les réglementations environnementales et le souci de maîtriser les dépenses incitent les industries à rechercher toujours plus d'économies d'énergie.

Un but de l'invention est de satisfaire, au moins partiellement, ce besoin.

**Résumé de l'invention**

On atteint ce but au moyen d'une unité de stockage thermique comportant les caractéristiques de la revendication 1.

Comme on le verra plus en détail dans la suite de la description, les passages constituent des zones offrant de grandes surfaces d'échange thermique et les ouvertures obturées (obturations des ouvertures en aval des passages) améliorent le détournement d'une partie du flux de fluide caloporteur vers ces passages. Une unité de stockage thermique selon l'invention présente ainsi à la fois une capacité de stockage élevée et une grande efficacité. De préférence, la grande face supérieure de la strate inférieure obture également, au moins en partie, une ou plusieurs ouvertures inférieures de conduits supérieurs de la strate supérieure, lorsque lesdites ouvertures inférieures sont observées, suivant leur axe respectif, depuis lesdits conduits supérieurs. Les ouvertures inférieures de la strate supérieure ainsi obturées sont dites « ouvertures inférieures obturées ».

Sauf indication contraire, une caractéristique qui concerne une « ouverture obturée » peut concerner une ouverture supérieure obturée ou une ouverture inférieure obturée.

Une « ouverture obturée » peut en particulier consister en une réduction de la section de passage du conduit, et/ou en un décalage partiel entre deux ouvertures de conduits qui se font face. Lorsqu'une ouverture d'un conduit d'une strate n'est pas complètement obturée, elle fait face à au moins un autre conduit de l'autre strate, coaxial ou non, dit « conduit correspondant ». Les ouvertures qui se font face sont également dites « correspondantes ». Par définition, un « conduit correspondant » est donc différent d'un « conduit entièrement décalé ».

Une unité de stockage thermique selon l'invention peut encore présenter une ou plusieurs des caractéristiques optionnelles suivantes :

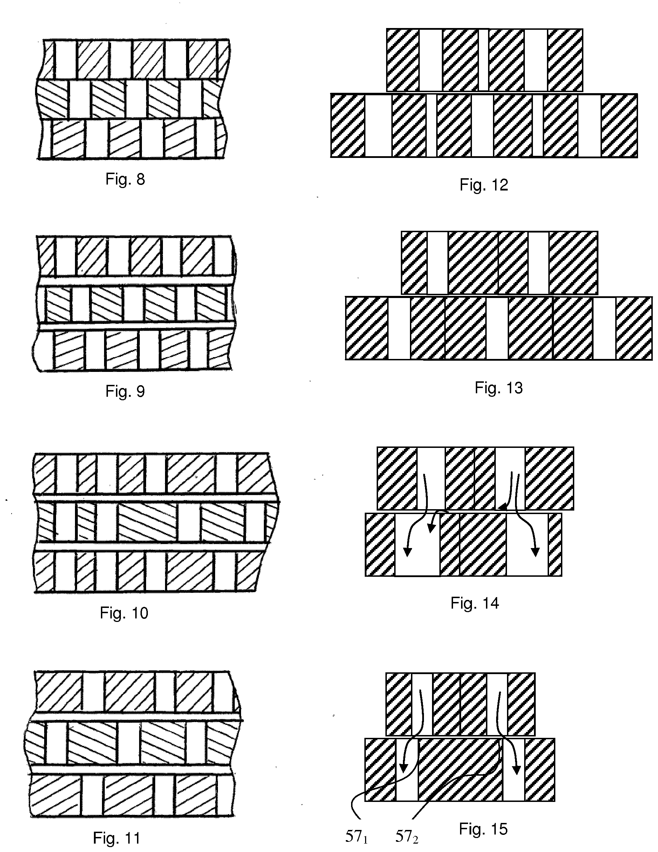

- le taux d'obturation d'une ouverture obturée est supérieur à 10%, de préférence supérieur à 20%, de préférence supérieur à 30%, de préférence supérieur à 40%, de préférence supérieur à 50%, de préférence supérieur à 60%, de préférence supérieur à 70%, de préférence supérieur à 80%, de préférence supérieur à 90%, de préférence de 100% ;
- le taux d'obturation de plus de 70%, de préférence de plus de 90%, de préférence de plus de 95% en nombre des ouvertures supérieures obturées de ladite strate inférieure est de 100%, un taux d'obturation de 100% étant particulièrement bien adapté lorsque le fluide caloporteur est un gaz porté à haute pression, typiquement supérieure à 10 bar ;
- dans un mode de réalisation, les ouvertures obturées d'une même strate présentent sensiblement le même taux d'obturation ;
- le taux d'obturation, en moyenne sur un couple de strates à passage, est d'autant plus grand que ledit couple est à proximité d'une extrémité de l'empilement, la variation pouvant présenter des paliers sur plusieurs couples de strates à passages superposées ;
- dans un mode de réalisation préféré, une, de préférence au moins 10%, de préférence au moins 30%, de préférence au moins 50%, de préférence au moins 70%, de préférence au moins 90% en nombre, de préférence sensiblement toutes les ouvertures supérieures et/ou inférieures obturées ne sont pas coaxiales avec une ouverture inférieure et/ou supérieure, respectivement, correspondante et, de préférence, le rapport des surfaces d'une ouverture (indépendamment de l'obturation) et d'une ouverture correspondante est compris entre 0,1 et 10, voire entre 0,1 et 5. Dans un mode de réalisation, ledit rapport est compris entre 0,9 et 1,1, voire sensiblement égal à 1 ;
- dans un mode de réalisation, une, de préférence toute ouverture obturée est coaxiale avec une ouverture correspondante, le rapport des surfaces de ladite ouverture obturée (indépendamment de l'obturation) et de ladite ouverture correspondante étant de préférence compris entre 0,1 et 10, voire entre 0,1 et 5, et de préférence supérieur à 1,1 ou inférieur à 0,9 ;
- la grande face supérieure de la strate inférieure obture, au moins en partie, une ouverture inférieure de la strate supérieure, dite « ouverture inférieure obturée », lorsque ladite ouverture inférieure est observée, suivant son axe, depuis ledit conduit supérieur ;
- le rapport du nombre des ouvertures supérieures obturées sur le nombre des ouvertures inférieures obturées est compris entre 0,7 et 1,3, de préférence entre 0,8 et 1,2, de préférence entre 0,9 et 1,1, de préférence sensiblement égal à 1 ;
- dans un mode de réalisation, plus de 20%, de préférence plus de 70%, de préférence plus de 95% en nombre des ouvertures inférieures de ladite strate supérieure sont des ouvertures inférieures obturées ;
- dans un mode de réalisation, par exemple comme représenté sur la figure 12, plus de 20% et moins de 60% en nombre des ouvertures inférieures de ladite strate supérieure sont des ouvertures inférieures obturées ;
- plus de 20%, plus de 30%, plus de 40%, plus de 50%, plus de 70%, plus de 90% en nombre, voire toutes lesdites ouvertures supérieures de ladite strate inférieure et/ou les ouvertures inférieures de ladite strate supérieure sont des ouvertures obturées par la grande face inférieure de ladite strate supérieure et/ou par la grande face supérieure de ladite strate inférieure, respectivement ;
- dans un mode de réalisation, plus de 20%, plus de 30%, plus de 40%, plus de 50%, plus de 70%, plus de 90% en nombre, voire toutes lesdites ouvertures supérieures de ladite strate inférieure sont des ouvertures obturées par la grande face inférieure de la strate supérieure et plus de 20%, plus de 30%, plus de 40%, plus de 50%, plus de 70%, plus de 90% en nombre, voire toutes lesdites ouvertures inférieures de ladite strate supérieure sont des ouvertures obturées par la grande face supérieure de la strate inférieure ;
- les caractéristiques selon l'invention des ouvertures supérieures obturées sont présentées par plus de 50%, plus de 70%, plus de 90%, de préférence 100% en nombre des ouvertures inférieures obturées ;
- ledit passage, de préférence tout passage, s'étend sensiblement horizontalement ;
- la hauteur maximale dudit passage est supérieure à 1 mm, voire supérieure à 2 mm, voire supérieure à 3 mm et inférieure à 3 cm, de préférence inférieure à 2 cm, de préférence inférieure à 1 cm ;

- ledit passage met en communication de fluide ladite ouverture supérieure dudit conduit inférieur avec plus de 10%, plus de 30%, plus de 50%, plus de 70%, plus de 90%, de préférence sensiblement 100% en nombre des ouvertures inférieures des conduits supérieurs de ladite strate supérieure ;
- ledit passage met en communication de fluide plus de 10%, plus de 30%, plus de 50%, plus de 70%, plus de 90%, voire sensiblement 100% en nombre des ouvertures supérieures des conduits inférieurs de ladite strate inférieure avec plus de 10%, plus de 30%, plus de 50%, plus de 70%, plus de 90%, voire sensiblement 100% en nombre des ouvertures inférieures des conduits supérieurs de ladite strate supérieure ;
- dans un mode de réalisation, plus de 50%, plus de 70%, plus de 90%, voire sensiblement 100% en nombre des conduits sont des perforations ;
- dans un mode de réalisation, plus de 50%, plus de 70%, plus de 90%, voire sensiblement 100% en nombre des conduits présentent une section transversale dont toutes les dimensions sont supérieures à 5 mm, et/ou inférieures à 100 mm, à 50 mm, à 30 mm, quel que soit le plan de coupe considéré, de préférence lorsque la température est supérieure à 1000°C, 1200°C ou 1500°C, de préférence à la température de charge ;
- de préférence, chaque dit conduit présente, sur toute sa longueur, une section transversale de passage dont le diamètre équivalent est toujours supérieur à 5 mm, supérieur à 10 mm, voire supérieur à 15 mm, et/ou une ouverture supérieure et/ou une ouverture inférieure dont le diamètre équivalent est supérieur à 5 mm, de préférence supérieur à 10 mm, voire supérieur à 15 mm ;
- plus de 20%, plus de 30%, plus de 40%, plus de 50%, plus de 70%, plus de 90%, de préférence 100% en nombre des couples de strates superposées de l'empilement sont des couples de strates à passage ;
- plus de 50%, de préférence plus de 70%, de préférence plus de 90%, de préférence 100% en nombre des couples de strates à passage de l'empilement comportent une, de préférence plusieurs, de préférence toutes les caractéristiques du couple de strates à passage décrit ci-dessus ;
- dans un mode de réalisation préféré, le rapport du nombre d'obstacles actifs dans un sens de circulation dudit fluide caloporteur sur le nombre d'obstacles actifs dans l'autre sens de circulation dudit fluide caloporteur est compris entre 0,7 et 1,3, de préférence entre 0,8 et 1,2, de préférence entre 0,9 et 1,1, de préférence d'environ 1, en considérant un couple de strates à passage, de préférence en considérant plus de 50%, plus de 70%, plus de 90% de préférence 100% en nombre des couples de strates à passage de l'empilement ;
- l'empilement de briques présente une fraction volumique de vide inférieure ou égale à 50%, de préférence inférieure ou égale à 40%, de préférence inférieure ou égale à 30%, de préférence inférieure ou égale à 25%, voire inférieure ou égale à 20% et/ou supérieure ou égale à 10%, de préférence supérieure ou égale à 15% ;
- l'empilement comporte une, de préférence plus de 5%, plus de 10%, de préférence plus de 20%, de préférence plus de 30%, de préférence plus de 40%, de préférence plus de 50%, de préférence plus de 60%, de préférence plus de 70%, de préférence plus de 80%, de préférence plus de 90%, de préférence sensiblement 100%, en nombre, de briques selon l'invention, telles que définies ci-après ;
- un matériau en vrac est disposé entre l'enceinte et l'empilement, ce qui permet d'optimiser la capacité de stockage d'énergie ;
- le matériau en vrac utilisé est identique au matériau utilisé dans l'empilement ;
- de préférence, la taille minimale des particules du vrac est supérieure à la hauteur des passages de manière à éviter le bouchage desdits passages ;
- l'empilement comporte une ou plusieurs entretoises interposées entre les strates superposées pour ménager le passage ;
- de préférence, le passage est obtenu par la forme des briques, de préférence par la présence d'au moins un pied d'une brique de la strate inférieure ou de la strate supérieure, dont l'extrémité libre est en appui sur la grande face inférieure de la strate supérieure et/ou sur la grande face supérieure de la strate inférieure, respectivement ;
- de préférence, le pied est logé dans un logement d'une brique ;
- dans un plan de coupe longitudinal contenant les axes de deux conduits adjacents appartenant à une même strate et en communication de fluide par l'intermédiaire d'un passage, comme représenté sur la figure 15 par exemple, les obstacles aptes à détourner du fluide caloporteur provenant desdits conduits adjacents dans ledit passage ne sont pas symétriques, c'est-à-dire que les obstacles n'agissent pas avec la même efficacité de manière que du fluide caloporteur circule entre lesdits obstacles ;
- dans l'empilement, plus de 30%, plus de 50%, plus de 70%, plus de 90%, voire 100% des couples de deux conduits adjacents appartenant à une même strate et en communication de fluide par l'intermédiaire d'un passage, présentent une configuration telle que, dans un plan de coupe longitudinal contenant les axes desdits conduits adjacents, les obstacles aptes à détourner du fluide caloporteur provenant desdits conduits adjacents dans ledit passage ne sont pas symétriques ;
- De préférence, les obstacles de l'empilement sont conformés pour que plus de 50%, plus de 70%, plus de 90%, de préférence 100% en nombre des passages de l'empilement soient parcourus par du fluide caloporteur lors de la phase de charge et/ou de la phase de décharge.

Dans un mode de réalisation préféré, plus de 20%, de préférence plus de 30%, de préférence plus de 40%, de préférence plus de 50%, de préférence plus de 70%, de préférence plus de 90%, de préférence 100% en nombre des couples de strates superposées de l'empilement forment chacun un couple de strates à passage,

plus de 20%, de préférence plus de 30%, de préférence plus de 40%, de préférence plus de 50% et moins de 90%, de préférence moins de 80% en nombre, des ouvertures supérieures de la strate inférieure de chaque dit couple de strates à passage étant des ouvertures obturées par la grande face inférieure de la strate supérieure dudit couple de strates à passage, et

plus de 20%, de préférence plus de 30%, de préférence plus de 40%, de préférence plus de 50% et moins de 90%, de préférence moins de 80% en nombre, des ouvertures inférieures de la strate supérieure de chaque dit couple de strates à passage étant des ouvertures obturées par la grande face supérieure de la strate inférieure dudit couple de strates à passage, et

le taux d'obturation des ouvertures obturées étant de préférence supérieur à 70%, de préférence supérieur à 80%, de préférence supérieur à 90%, de préférence égal à 100%.

L'invention concerne également, selon un mode de réalisation, une unité de stockage thermique avec une brique, ladite brique

- étant délimitée par une face supérieure, une face inférieure, de préférence parallèle à ladite face supérieure, et une surface latérale s'étendant, sensiblement selon un cylindre virtuel, entre lesdites faces supérieure et inférieure et de préférence perpendiculairement aux dites faces supérieure et inférieure, et
- comportant une perforation traversant ladite brique et débouchant sur lesdites faces supérieure et inférieure,

la perforation et la surface latérale de la brique étant conformées de manière que, dans un couple de strates constitué de dites briques agencées sous la forme d'une strate inférieure compacte et d'une strate supérieure compacte superposée à ladite strate inférieure, tout ou partie des trous interfaciaux de la strate inférieure correspondent avec des perforations de briques de la strate supérieure, et/ou tout ou partie des trous interfaciaux entre les briques de la strate supérieure correspondent avec des perforations de briques de la strate inférieure,

un trou interfacial d'une strate étant un conduit ménagé entre les briques de ladite strate et débouchant sur des grandes faces inférieure et supérieure de ladite strate,

une correspondance entre un trou interfacial et une perforation correspondant à une obturation partielle d'au moins une des ouvertures du trou interfacial et de la perforation en regard,

une strate étant compacte lorsque les briques qui la constituent occupent un volume minimal.

Une brique selon ce mode de réalisation de l'invention peut encore présenter une ou plusieurs des caractéristiques optionnelles suivantes :

- la brique ne comporte qu'une unique perforation ;
- la perforation s'étend au centre de la brique.

L'invention concerne également, selon un mode de réalisation, une unité de stockage thermique selon l'invention avec une brique, ladite brique :

- étant délimitée par une face supérieure, une face inférieure, de préférence parallèle à ladite face supérieure, et une surface latérale s'étendant, sensiblement selon un cylindre virtuel, entre lesdites faces supérieure et inférieure et de préférence perpendiculairement aux dites faces supérieure et inférieure, ledit cylindre virtuel ayant de préférence une base de forme carrée, hexagonale ou octogonale, et
- comportant plus de 20, de préférence plus de 30, de préférence plus de 40, de préférence plus de 50, de préférence plus de 60 perforations traversant ladite brique et débouchant sur lesdites faces supérieure et inférieure, et
- présentant une fraction volumique de vide inférieure ou égale à 60% et supérieure ou égale à 10%,

les perforations étant conformées et/ou réparties, et la géométrie de la brique étant conformée de manière que, dans un couple de strates constitué d'une strate inférieure compacte constituée de dites briques et d'une strate supérieure compacte superposée à ladite strate inférieure, chaque dite brique puisse occuper le même espace dans plusieurs positions opérationnelles, de préférence au nombre de 2, 3 ou 4, le taux d'obturation moyen des ouvertures supérieures des perforations de chaque dite brique étant variable en fonction de la position opérationnelle adoptée.

Une brique selon ce mode de réalisation de l'invention peut encore présenter une ou plusieurs des caractéristiques optionnelles suivantes :

- la brique présente une géométrie adaptée pour que le changement de position opérationnelle résulte d'une rotation de la brique, de préférence autour de l'axe dudit cylindre virtuel ;
- les perforations sont réparties de manière irrégulière dans la brique ;
- au moins une perforation est écartée des perforations adjacentes d'une distance variable en fonction de la perforation adjacente considérée ;
- les perforations sont parallèles les unes aux autres ;
- plus de 50% en nombre des perforations présentent chacune un diamètre équivalent moyen supérieur à 5 mm et inférieur à 25 mm ;
- la densité surfacique de perforations à la surface supérieure de la brique est supérieure à 1000, de préférence supérieure à 1200, de préférence supérieure à 1400 perforations par mètre carré.

Quel que soit le mode de réalisation, une brique peut encore présenter une ou plusieurs des caractéristiques optionnelles suivantes :

- la base du cylindre est conformée pour occuper plus de 70% et moins de 95% de la surface du plus petit carré dans lequel elle peut être inscrite, et/ou ladite brique présentet une fraction volumique de vide inférieure ou égale à 60% et supérieure ou égale à 10% ;
- la base du cylindre est octogonale et présente quatre grands côtés parallèles deux à deux et quatre petits côtés parallèles deux à deux, chaque petit côté étant adjacent à deux grands côtés ;
- la brique comporte un pied faisant saillie de ladite face supérieure ou de ladite face inférieure, et un logement sur la face opposée à la face présentant le pied, de manière à ce qu'un pied d'une autre brique identique puisse se loger dans ledit logement ;
- ledit pied et ledit logement sont conformés de manière que la longueur dudit pied soit supérieure à la profondeur dudit logement de plus de 1 mm, de préférence de plus de 2 mm, de préférence de plus de 3 mm et de moins de 3 cm, de préférence de moins de 2 cm, de préférence de moins de 1 cm ;
- la brique est de préférence constituée en en un matériau présentant une capacité calorifique à 25°C supérieure à 600 J.°C$^{-1}$.kg$^{-1}$ ;
- la brique est constituée en un matériau présentant l'analyse chimique suivante, en pourcentages massiques :

  - 25% < $Fe_2O_3$ < 90%, et
  - 5% < $Al_2O_3$ < 30%, et
  - CaO < 20%, et
  - $TiO_2$ < 25%, et
  - 3% < $SiO_2$ < 50%, et
  - $Na_2O$ < 10%,
    pourvu que $Fe_2O_3 + Al_2O_3 + CaO + TiO_2 + SiO_2 + Na_2O$ > 80%, de préférence > 85%, voire > 90%, et
  - Autres oxydes : complément à 100% ;

- ladite brique présente une fraction volumique de vide (rapport entre le volume de matière (en ignorant la porosité de cette matière) et le volume défini par la surface extérieure de la brique (en ignorant les perforations)) inférieure ou égale à 60%, de préférence inférieure ou égale à 50%, de préférence inférieure ou égale à 40%, de préférence inférieure ou égale à 30%, de préférence inférieure ou égale à 25%, voire inférieure ou égale à 20% et/ou supérieure ou égale à 10%, de préférence supérieure ou égale à 15% ;
- ladite brique présente une masse supérieure à 10 kg et inférieure à 25 kg ;
- ladite brique comporte des corrugations, différentes des obstacles, destinées à perturber la circulation du fluide caloporteur, de préférence ménagées dans une ou plusieurs, de préférence toutes les perforations de la brique et/ou sur la face latérale et/ou sur la face supérieure et/ou sur la face inférieure de la brique.

L'invention concerne également un ensemble comportant :

- une unité de stockage thermique selon l'invention, et
- un dispositif de circulation assurant

  - pendant une phase de charge, la circulation d'un fluide caloporteur de charge à travers ladite unité de stockage thermique, et
  - pendant une phase de décharge, une circulation d'un fluide caloporteur de décharge à travers ladite unité de stockage thermique,

au moins un desdits fluides caloporteurs de charge et de décharge, de préférence les deux fluides caloporteurs de charge et de décharge, circulant dans l'empilement depuis ledit conduit inférieur vers au moins un conduit supérieur.

Dans un mode de réalisation, lors de la décharge, le fluide caloporteur de décharge circule dans le sens opposé au sens de circulation du fluide caloporteur de charge lors de la charge.

De préférence, plus de 50%, plus de 70%, plus de 90%, de préférence 100% en nombre des passages de l'empilement sont parcourus par du fluide caloporteur lors de la phase de charge et/ou de la phase de décharge.

De préférence encore, plus de 50%, plus de 70%, plus de 90%, de préférence 100% en nombre des passages de l'empilement sont parcourus par du fluide caloporteur lors de la phase de charge et de la phase de décharge.

L'invention concerne aussi une installation thermique comportant :

- une unité produisant de l'énergie calorifique, par exemple un four, une tour solaire, ou un compresseur, et
- un ensemble selon l'invention, le dispositif de circulation dudit ensemble assurant, pendant une phase de charge, la circulation du fluide caloporteur de charge depuis l'unité produisant de l'énergie calorifique jusqu'à l'unité de stockage thermique, puis à travers ladite unité de stockage thermique.

De préférence, une installation thermique selon l'invention comporte un consommateur d'énergie calorifique, ledit dispositif de circulation assurant, pendant la phase de décharge, une circulation du fluide caloporteur de décharge à travers ladite unité de stockage thermique, puis depuis ladite unité de stockage thermique jusqu'au consommateur d'énergie calorifique.

## Brève description des figures

D'autres objets, aspects, propriétés et avantages de la présente invention apparaîtront encore à la lumière de la description et des exemples qui suivent et à l'examen du dessin annexé dans lequel :

- la figure 1 représente schématiquement une installation thermique selon l'invention ;
- la figure 2 représente schématiquement une unité de stockage thermique selon l'invention ;
- la figure 3 (3a-3e) représente schématiquement des détails d'empilements de briques d'unités de stockage thermique selon l'invention, les briques étant coupées suivant leurs longueurs dans des plans médians (sous les figures 3a-3c, les projections des ouvertures inférieures et supérieures à l'interface avec le passage ont été représentées)
- la figure 4 (4a-4c) représente schématiquement un détail d'un empilement de briques d'une unité de stockage thermique suivant un mode de réalisation préféré ; La figure 4b est une vue en perspective, la figure 4a est une vue en coupe, suivant le plan P représenté sur la figure 4b, et la figure 4c est une vue de dessus de l'assemblage représenté sur la figure 4b ;
- la figure 5 représente un exemple de contour d'une brique utilisable dans une unité de stockage thermique selon l'invention ;
- les figures 6 et 7 représentent une brique destinée à une unité de stockage thermique selon l'invention;
- les figures 8, 9, 10 et 11 représentent un schéma de principe de l'assemblage réalisé dans l'unité de stockage thermique des exemples 3, 4, 5 et 6, respectivement ;
- les figures 12, 13 et 14 illustrent des agencements de briques préférés ; et
- la figure 15 illustre un agencement « en miroir » à éviter.

Dans les différentes figures, des références identiques sont utilisées pour désigner des organes identiques ou analogues. Des flèches en traits interrompus représentent des flux de fluides caloporteurs.

## Définitions

Le terme « installation thermique » est à comprendre au sens large, comme signifiant toute installation comportant une unité produisant de l'énergie calorifique.

Par « unité produisant de l'énergie calorifique », on envisage non seulement les unités qui sont spécifiquement prévues pour générer de l'énergie calorifique, comme une tour solaire, mais aussi les unités qui, de par leur fonctionnement génèrent de l'énergie calorifique, par exemple un compresseur.

Le terme « consommateur d'énergie calorifique » désigne un élément capable de recevoir de l'énergie calorifique. Il peut notamment en résulter une augmentation de la température du consommateur (par exemple dans le cas de chauffage d'un bâtiment) et/ou une transformation en énergie mécanique (par exemple dans une turbine à gaz).

Par « strate » de briques, on entend un ensemble de briques disposées au même niveau dans l'empilement.

Des ouvertures supérieure et inférieure sont dites « entièrement décalées » lorsqu'il n'existe aucune zone de recouvrement lorsque l'ouverture inférieure est projetée sur le plan dans lequel s'étend l'ouverture supérieure. Ces conduits inférieur et supérieur ne peuvent donc être en communication que par l'intermédiaire d'un passage.

Sauf indication contraire, dans un couple de strates à passage, un « obstacle » désigne une partie d'une strate qui vient en saillie dans la projection de l'ouverture d'un conduit d'une strate adjacente, de manière que cette dernière ouverture soit une « ouverture obturée ».

Un obstacle est dit « actif » dans un sens de circulation du fluide caloporteur lorsqu'il détourne vers un passage le fluide caloporteur circulant dans ce sens.

La direction principale d'écoulement du fluide caloporteur est la direction selon laquelle le fluide caloporteur se déplace, en moyenne, entre l'entrée et la sortie de l'empilement. De préférence, les conduits sont sensiblement orientés selon cette direction.

Par « immédiatement supérieur » ou « immédiatement inférieur », on entend « positionné au-dessus et en contact » ou « positionné au-dessous et en contact », respectivement.

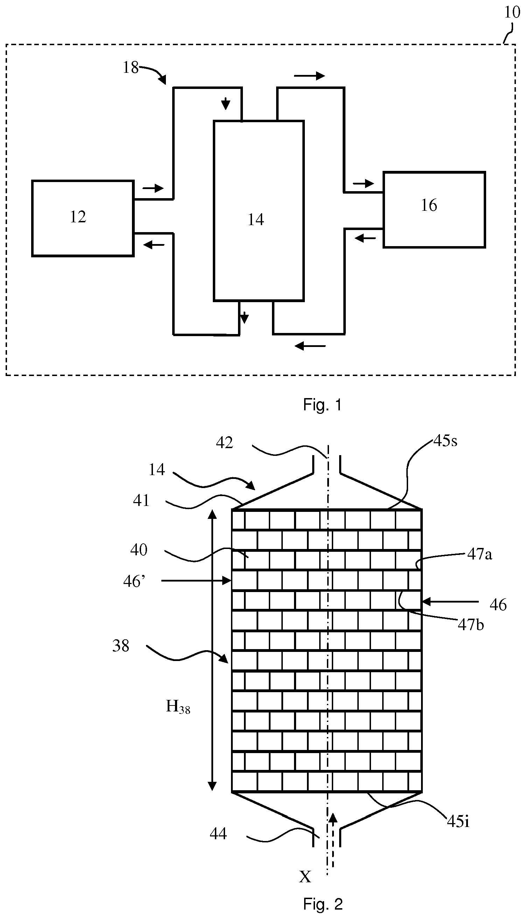

Les adjectifs « inférieur » et « supérieur » sont utilisés à des fins de clarté pour correspondre à des positions relatives dans un empilement vertical, comme représenté sur la figure 2. Avec un tel empilement, la présence d'« ouvertures supérieures obturées » permet d'obtenir le résultat recherché si l'écoulement s'effectue de bas en haut. Bien entendu, l'invention n'est cependant pas limitée à un tel écoulement. Si l'écoulement s'effectue de haut en bas, l'empilement doit présenter des « ouvertures inférieures obturées ». Autrement dit, ces adjectifs doivent être interprétés comme de simples références, non limitatives, et la portée des revendications est identique à celle qui résulterait du remplacement de ces adjectifs par « première » et « deuxième », respectivement.

Sauf indication contraire, une ouverture « obturée » est partiellement ou totalement obturée.

On appelle « taux d'obturation » le pourcentage de la surface d'une ouverture obturée qui est obturé. Un taux d'obturation de 100% correspond par exemple à une obturation totale.

Une « perforation » est un conduit traversant une brique.

Le diamètre équivalent « moyen » d'une perforation débouchant sur des faces supérieure et inférieure d'une brique est la moyenne des diamètres équivalents des ouvertures de la perforation sur lesdites faces supérieure et inférieure.

Le diamètre « équivalent » d'une ouverture est le diamètre d'un disque de même surface que ladite ouverture.

Par « transversal », on entend « perpendiculaire à la direction de la longueur ».

Par « matériau céramique », on entend un matériau qui n'est ni organique, ni métallique.

Les teneurs en oxydes se rapportent aux teneurs globales pour chacun des éléments chimiques correspondants, exprimées sous la forme de l'oxyde le plus stable, selon la convention habituelle de l'industrie.

Classiquement, la température de fusion est mesurée sous pression atmosphérique, par exemple par analyse calorimétrique différentielle (ou « Differential Scanning Calorimetry » ou « DSC » en anglais).

Une « communication de fluide » entre deux emplacements signifie qu'un fluide peut circuler entre ces deux emplacements et non pas qu'une telle circulation aura effectivement lieu en exploitation.

Sauf indication contraire, tous les pourcentages sont des pourcentages massiques.

Sauf indication contraire, les dimensions sont mesurées à température ambiante (20°C).

Par « contenant un », « comprenant un » ou « comportant un », on entend « comportant au moins un », sauf indication contraire.

## Description détaillée

L'installation thermique 10 selon l'invention représentée sur la figure 1 comprend une unité produisant de l'énergie calorifique 12, une unité de stockage thermique 14, un consommateur d'énergie calorifique 16 et un dispositif de circulation 18.

L'unité produisant de l'énergie calorifique 12 peut être par exemple être un four ou une tour solaire, ou un compresseur. De préférence, l'unité produisant de l'énergie calorifique produit plus de 50 kWh, ou plus de 100 kWh, voire plus de 300 kWh, voire plus de 1 MWh, voire plus de 5 MWh d'énergie calorifique.

Le consommateur d'énergie calorifique 16 peut être par exemple un bâtiment ou un ensemble de bâtiments, un réservoir, un bassin, une turbine couplée à un alternateur afin de générer de l'électricité, une installation industrielle consommant de la vapeur d'eau, par exemple l'industrie de la fabrication de la pâte à papier ou une chaudière à vapeur.

Le dispositif de circulation 18 comporte classiquement un ensemble de canalisations, de vannes et de pompes/ventilateurs/extracteurs commandés de manière à pouvoir sélectivement mettre en communication l'unité de stockage thermique

- avec l'unité produisant de l'énergie calorifique 12 de manière qu'il puisse recevoir un fluide caloporteur de charge sortant de ladite unité, pendant les phases de charge, et
- avec le consommateur d'énergie calorifique 16 de manière que le fluide caloporteur de décharge réchauffé sortant de l'unité de stockage thermique puisse réchauffer ledit consommateur, ou plus généralement transférer de l'énergie calorifique audit consommateur, pendant les phases de décharge,

et de manière à pouvoir forcer la circulation du fluide caloporteur de charge et/ou du fluide caloporteur de décharge à travers l'unité de stockage thermique 14.

Les fluides caloporteurs de charge et de décharge peuvent être de même nature ou non.

Le fluide caloporteur mis en oeuvre pour la charge et/ou la décharge de l'unité de stockage thermique peut être un gaz, par exemple de l'air, de la vapeur d'eau, ou un gaz caloporteur, ou être un liquide, par exemple de l'eau, une huile thermique, des sels fondus ou des métaux ou alliages fondus.

Unité de stockage thermique

La figure 2 représente un exemple d'unité de stockage thermique 14. Cette unité de stockage thermique comporte un empilement 38 d'axe longitudinal X, de préférence sensiblement vertical.

Dans un mode de réalisation, l'unité de stockage thermique comporte plusieurs empilements séparés afin notamment de limiter le poids supporté par les strates en bas de chaque empilement.

L'empilement 38, constitué de briques 40, est disposé dans une enceinte 41, par exemple en métal ou en matériau céramique, présentant un orifice supérieur 42 et un orifice inférieur 44 par lesquels, de préférence, les fluides caloporteurs de charge et de décharge, respectivement, entrent dans l'unité de stockage thermique. De préférence, les fluides caloporteurs de charge et de décharge sortent de l'unité de stockage thermique 14 par les orifices inférieur 42 et supérieur 44, respectivement.

La hauteur $H_{38}$ de l'empilement 38, entre sa face supérieure 45s et sa face inférieure 45i, est de préférence supérieure à 1 m, de préférence supérieur à 5 m, de préférence supérieure à 15 m, de préférence supérieure 25 m, voire supérieure à 35 m, voire supérieure 50 m.

La masse de l'empilement 38 est de préférence supérieure à 1 T, de préférence supérieure à 10 T, voire supérieure à 100 T, voire supérieure à 500 T, voire supérieure à 700 T, voire supérieure à 2000 T, voire supérieure à 4000 T, voire supérieure à 5000 T, voire supérieure à 7000 T.

L'empilement 38 est une superposition de strates 46, ou « étages ». Les strates 46 s'étendent de préférence sensiblement horizontalement. Dans un mode de réalisation, les strates ont sensiblement la même hauteur. Dans un mode de réalisation, sensiblement toutes les briques d'une strate sont identiques. Les briques d'une strate peuvent être identiques ou différentes des briques d'une autre strate.

La densité de strates selon la hauteur est de préférence supérieure ou égale à 5 strates par mètre et/ou inférieure à 15 strates par mètre.

Deux strates superposées forment un « couple » de strates. La première des strates traversée par le fluide caloporteur est appelée « strate inférieure », la deuxième étant appelée « strate supérieure ». Dans la suite de la description et dans un souci de clarté, toutes les références relatives à un objet d'une strate supérieure sont affectées d'un signe « prime ».

Chaque strate appartient donc à un couple dans lequel elle constitue la strate inférieure 46 et un couple dans laquelle elle constitue la strate supérieure 46' (sauf les strates aux extrémités de l'empilement, qui n'appartiennent qu'à un seul couple de strates).

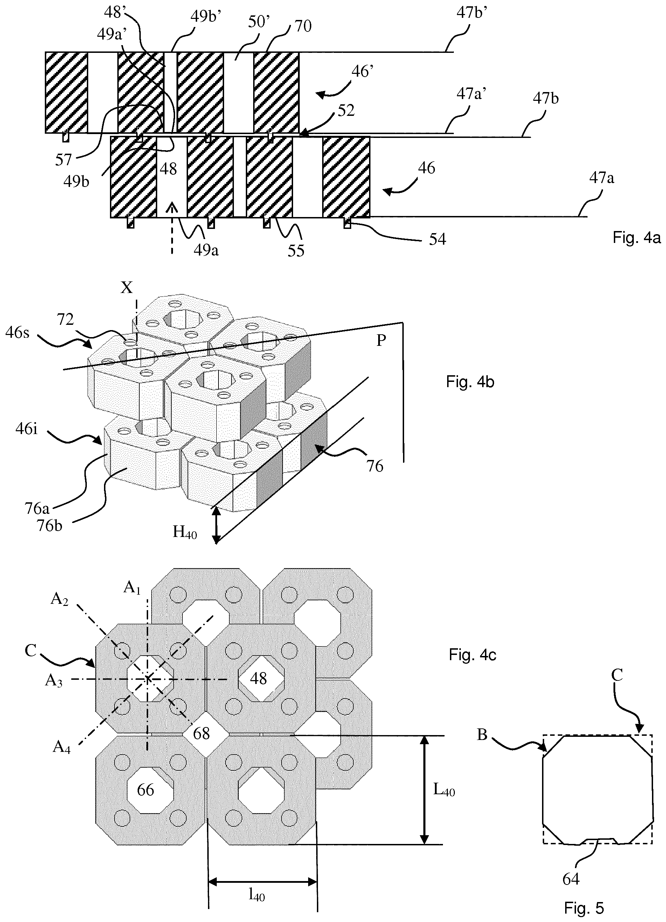

Une strate 46 définit, par rapport au sens d'écoulement du fluide de charge (flèche en trait interrompu sur la figure 2 ou la figure 4a), une grande face inférieure 47a et une grande face supérieure 47b.

Dans un couple de strates, la grande face supérieure de la strate inférieure 46 fait face à la grande face inférieure de la strate supérieure 46'.

Chaque strate est constituée de briques 40.

Les briques d'une strate peuvent être exactement superposées à celles d'une strate immédiatement inférieure, sans recouvrement. De préférence cependant, comme représenté sur la figure 4, une strate est décalée latéralement par rapport à la strate sur laquelle elle s'étend. Autrement dit, les briques de ces deux strates ne sont pas superposées exactement les unes au-dessus des autres, une brique de la strate supérieure reposant sur plusieurs briques de la strate inférieure. La stabilité de l'empilement en est améliorée.

Dans un même empilement, certaines strates peuvent être en superposition exacte et d'autres être décalées latéralement.

Toutes les briques d'une strate ou de l'empilement (à l'exception éventuellement des briques en périphérie de la strate ou de l'empilement) peuvent présenter des formes ou des dimensions identiques ou différentes.

Deux strates superposées l'une à l'autre peuvent être constituées de briques présentant des formes ou des dimensions identiques ou différentes.

Les briques 40 sont conformées et/ou agencées, de préférence régulièrement, pour constituer des conduits 48. Comme représenté sur la figure 4a, chaque conduit 48 d'une strate 46 débouche sur les grandes faces inférieure 47a et supérieure 47b de la strate par des ouvertures inférieure 49a et supérieure 49b.

Les conduits 48 des strates superposées sont en communication de fluide de manière à permettre la circulation des fluides caloporteurs de charge et de décharge à travers l'empilement entre les orifices d'entrée et de sortie.

Les conduits 48 sont de préférence sensiblement rectilignes. Ils s'étendent de préférence tous sensiblement parallèlement à l'axe X de l'empilement.

Dans un couple de strates 46-46', les deux strates superposées sont espacées l'une de l'autre de manière à créer un passage 52. Un couple de strates séparées par un passage 52 est dit « couple de strates à passage ». De préférence, plus de 50%, plus de 80%, voire 100% en nombre des couples de strates de l'empilement sont des couples de strates à passage.

Comme représenté sur la figure 4a par exemple, un passage 52 connecte des conduits inférieurs 48 et des conduits supérieurs entièrement décalés 50' des strates inférieure 46 et supérieure 46' d'un couple de strates à passage. De préférence, chaque passage 52 met en communication de fluide plus de 2, plus de 3, plus de 4, plus de 5 conduits 48 avec des conduits entièrement décalés 50', et/ou, de préférence, plus de 10%, plus de 50%, plus de 70%, plus de 90%, voire sensiblement 100% en nombre des conduits 48 avec des conduits entièrement décalés 50'. De préférence, un passage 52 met en communication de fluide tous les conduits inférieurs et supérieurs entre eux.

Des entretoises peuvent être disposées entre lesdites strates. De préférence, les entretoises sont venues de matière avec les briques 40, les entretoises et les briques formant un ensemble monolithique. Elles peuvent par exemple prendre la forme de pieds 54 faisant saillie de la face inférieure 55 des briques, comme décrit ci-après.

De préférence, la hauteur $H_{52}$ d'un passage 52 est supérieure à 1 mm, voire supérieure à 2 mm, voire supérieure à 3 mm et inférieure à 3 cm, de préférence inférieure à 2 cm, de préférence inférieure à 1 cm. Avantageusement, l'unité de stockage thermique selon l'invention présente un bon compromis entre une masse de briques (ou « masse thermique ») importante et une perte de charge acceptable.

Dans un mode de réalisation, tous les passages de l'empilement, ont des dimensions, et en particulier des hauteurs, identiques. Dans un autre mode de réalisation, la hauteur des passages varie en fonction de leur position le long de l'axe X de l'empilement.

Dans les modes de réalisation représentés, les passages 52 s'étendent transversalement, c'est-à-dire perpendiculairement à l'axe X. Dans un mode de réalisation, toutes les briques d'une strate sont en contact les unes avec les autres de manière qu'il n'existe sensiblement pas de communication entre différents conduits d'une strate, sauf par l'intermédiaire des passages 52. De préférence, les briques sont cependant agencées pour qu'il existe, à température ambiante, un espace de dilatation latéral, en périphérie des briques, afin d'absorber partiellement ou totalement la dilatation thermique des briques. Il en résulte une augmentation de la durée de vie des briques et de l'unité de stockage thermique. Les briques sont écartées les unes des autres en fonction notamment de la dilatation thermique du matériau des briques, des dimensions des briques et de la température de fonctionnement des briques. Par exemple, un écartement supérieur à 2 mm entre deux briques de 20 cm de large est bien adapté pour une température de fonctionnement de l'ordre de 900°C lorsque les briques sont constituées en un matériau présentant l'analyse chimique suivante, en pourcentages massiques sur la base des oxydes :

- 25% < $Fe_2O_3$ < 90%, et
- 5% < $Al_2O_3$ < 30%, et
- CaO < 20%, et
- $TiO_2$ < 25%, et
- 3% < $SiO_2$ < 50%, et
- $Na_2O$ < 10%,
  pourvu que $Fe_2O_3$ + $Al_2O_3$ + CaO + $TiO_2$ + $SiO_2$ + $Na_2O$ > 80%, de préférence > 85%, voire > 90%, et
- Autres oxydes : complément à 100%.

Dans un empilement de briques d'une unité de stockage thermique classique, les espaces de dilatation latéraux entre des briques adjacentes, correspondant à des débits de fuite, ne sont pas adaptés pour servir de conduits.

En particulier, en service, ces espaces de dilatation se réduisent, voire disparaissent. De préférence, selon l'invention, les conduits présentent toujours une section transversale dont toutes les dimensions sont supérieures à 5 mm, et/ou inférieures à 100 mm, à 30 mm, quel que soit le plan de coupe considéré, de préférence lorsque la température est supérieure à 1000 °C, 1200 °C ou 1500 °C, de préférence à la température de charge.

De préférence, chaque conduit présente, sur toute sa longueur, une section transversale de passage dont le diamètre équivalent est toujours supérieur à 5 mm, supérieur à 10 mm, voire supérieur à 15 mm, et/ou une ouverture supérieure et/ou une ouverture inférieure dont le diamètre équivalent est supérieur à 5 mm, de préférence supérieur à 10 mm, voire supérieur à 15 mm.

La combinaison des obstacles 57 et des passages 52 permet avantageusement de constituer une circulation tridimensionnelle, dans tout le volume de l'enceinte, et d'augmenter considérablement la surface disponible pour les échanges thermiques. En outre, un nombre élevé de passages permet de réduire la vitesse du fluide caloporteur dans ces passages, et donc de s'assurer que la durée de contact avec les briques est suffisant pour transférer une quantité élevée d'énergie calorifique.

De préférence, plus de 50%, de préférence plus de 80%, de préférence 100% en nombre des couples de strates à passage comporte un obstacle 57 de manière à favoriser un écoulement de fluide caloporteur (dans un sens de passage dudit fluide caloporteur) dans le passage 52 du couple de strates.

Comme représenté par exemple sur la figure 4a, une même strate peut comporter un ou plusieurs premiers obstacles actifs dans le premier sens d'écoulement et un ou plusieurs deuxièmes obstacles actifs dans le deuxième sens d'écoulement. Les obstacles actifs dans le premier sens d'écoulement peuvent représenter plus de 30%, plus de 40%, de préférence sensiblement 50% en nombre des obstacles actifs d'une même strate, de préférence de l'empilement.

Dans un couple de strates 46-46' à passage, la présence d'un obstacle 57 correspond à la situation dans laquelle, lorsque l'ouverture supérieure 49b d'un conduit inférieur 48 de la strate inférieure 46 est projetée normalement (c'est-à-dire dans un plan transversal à la direction générale de l'écoulement) sur la grande face inférieure 47a' de la strate supérieure 46', l'intersection de cette projection d'aire $A_{proj}$ et des ouvertures inférieure 49a' qui s'étendent dans ladite grande face inférieure 47a' présente une aire inférieure à l'aire de ladite ouverture inférieure.

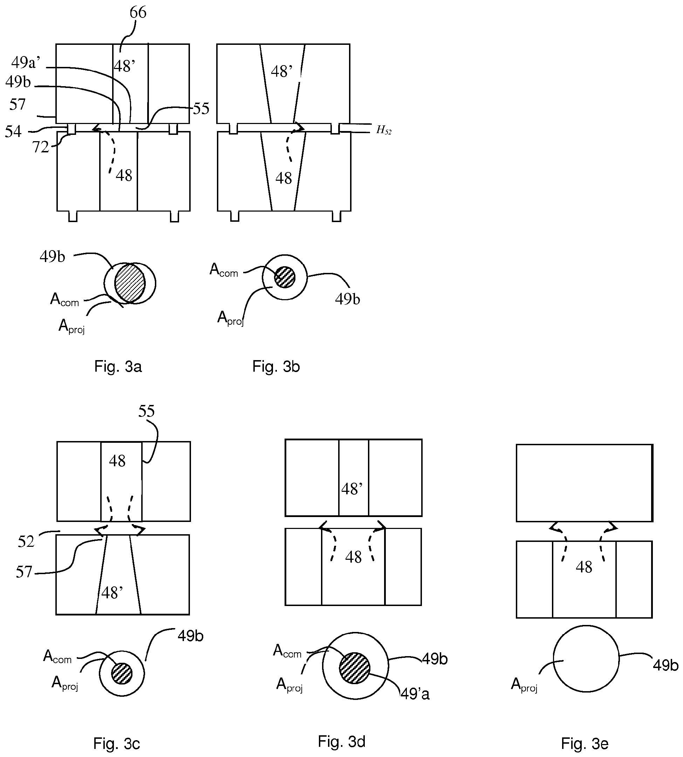

En particulier, si cette projection n'intersecte qu'une seule ouverture inférieure d'aire $A_{am}$, et si on appelle $A_{com}$ l'aire de ladite intersection, $A_{com} < A_{proj}$ (Figure 3d). De préférence, le rapport $A_{com}/A_{proj}$ (rapport R) est inférieur à 0,9, inférieur à 0,8, inférieur à 0,7, inférieur à 0,6, inférieur à 0,5, inférieur à 0,4, inférieur à 0,3, inférieur à 0,2, inférieur à 0,1, voire même égal à 0, cette valeur étant choisie en fonction des contraintes de fonctionnement, et notamment de la perte de charge admissible dans l'unité de stockage de la chaleur.

La strate supérieure 46' vient ainsi « obturer », au moins partiellement, l'ouverture supérieure 49b de la strate inférieure 46 lorsqu'elle est observée depuis le conduit inférieur 48, comme représenté sur les figures 3a-3d.

Le choix du rapport R est fonction des conditions d'utilisation de l'unité de stockage thermique. En particulier, lorsque le fluide caloporteur est un gaz porté à haute pression, typiquement supérieure à 10 bar, le rapport R est de préférence supérieur ou égal à 0 et inférieur à 0,7, de préférence inférieur à 0,5, voire inférieur à 0,3, voire inférieur à 0,1. Lorsque le fluide caloporteur est un gaz présentant une pression inférieure à 10 bar, le rapport R est de préférence supérieur à 0,7.

Ladite obturation peut résulter d'un conduit supérieur 48' en regard du conduit inférieur 48 et qui présente une ouverture inférieure 49a' d'une aire inférieure à celle de l'ouverture supérieure 49b du conduit inférieur 48, comme sur les figures 3b à 3e et 4a. L'obturation correspond alors à un décrochement, c'est-à-dire à une évolution brutale de la section transversale pour l'écoulement entre les conduits inférieur et supérieur.

L'obturation peut être totale, comme sur la figure 3e dans laquelle $A_{com} = 0$.

Ladite obturation peut également résulter d'un décalage entre deux ouvertures, d'aires identiques ou différentes, de conduits 48 et 48' qui se font face, comme sur la figure 3a.

Un tel décalage peut être systématique d'une strate à une autre, ou n'être appliqué que sur une partie seulement de l'empilement.

Une modélisation ou de simples essais permettent, en fonction des conditions d'exploitation, et en particulier en fonction de la nature et des débits des fluides caloporteurs, d'optimiser le dimensionnement et le positionnement des obstacles.

Dans un mode de réalisation, tous les obstacles sont identiques. Les obstacles peuvent également varier en fonction de leur emplacement, en particulier en fonction de la position du couple de strates à passage selon l'axe X de l'empilement. De préférence, les obstacles sont d'autant plus marqués, c'est-à-dire qu'ils modifient d'autant plus l'écoulement du fluide caloporteur, qu'ils sont positionnés à proximité de l'orifice permettant l'introduction d'un fluide caloporteur dans l'empilement. Les performances en sont améliorées.

La forme et l'agencement des briques et les conditions d'exploitation sont déterminés pour favoriser la circulation dans les passages. En particulier, il est préférable d'éviter les configurations dans lesquelles plusieurs obstacles sont disposés pour détourner du fluide caloporteur dans un même passage, mais dans des conditions d'écoulement conduisant à une circulation limitée, voire à une absence de circulation de fluide dans le passage. Par exemple, dans un plan de coupe comme représenté sur la figure 15, le passage est encadré par deux obstacles $57_1$ et $57_2$ agissant avec la même efficacité (configuration « miroir » par rapport au passage), ce qui conduit à une circulation sensiblement nulle.

Les figures 12, 13 et 14 illustrent des agencements préférés :
Comme illustré sur la figure 12, dans un mode de réalisation préféré,

- plus de 20%, de préférence plus de 30%, de préférence plus de 40% et de préférence moins de 60% en nombre des ouvertures supérieures de ladite strate inférieure sont des ouvertures obturées, et
- plus de 70%, de préférence plus de 80%, de préférence plus de 90%, de préférence plus de 95%, sensiblement 100% des ouvertures supérieures obturées sont coaxiales avec une ouverture inférieure correspondante d'un conduit supérieur, le rapport des surfaces d'une ouverture supérieure obturée (indépendamment de l'obturation) et de ladite ouverture inférieure coaxiale étant supérieur à 0,1, voire supérieur à 0,5 et inférieur à 10, de préférence inférieur à 5, de préférence inférieur à 2, de préférence inférieur à 1, de préférence inférieur à 0,9, de préférence inférieur à 0,8.

De préférence, et en particulier si un fluide caloporteur est susceptible de circuler dans les deux sens, l'empilement comporte des obstacles actifs dans l'autre sens. De préférence,

- plus de 20%, de préférence plus de 30%, de préférence plus de 40% et de préférence moins de 60% en nombre des ouvertures inférieures de ladite strate supérieure sont des ouvertures obturées, et plus de 70%, de préférence plus de 80%, de préférence plus de 90%, de préférence plus de 95%, de préférence sensiblement 100% des ouvertures inférieures obturées sont coaxiales avec une ouverture supérieure correspondante d'un conduit inférieur, le rapport des surfaces d'une ouverture inférieure obturée (indépendamment de l'obturation) et de ladite ouverture supérieure coaxiale étant supérieur à 0,1, voire supérieur à 0,5 et inférieur à 10, de préférence inférieur à 5, de préférence inférieur à 2, de préférence inférieur à 1, de préférence inférieur à 0,9, de préférence inférieur à 0,8.

De préférence, le rapport du nombre d'obstacles actifs dans un sens de circulation dudit fluide caloporteur sur le nombre d'obstacles actifs dans l'autre sens de circulation dudit fluide caloporteur est compris entre 0,7 et 1,3, de préférence entre 0,8 et 1,2, de préférence entre 0,9 et 1,1, de préférence d'environ 1.
De préférence plus de 50%, plus de 70%, plus de 90%, de préférence 100% en nombre des couples de strates à passage de l'empilement ont une configuration présentant une ou plusieurs, de préférence toutes les caractéristiques de ce mode de réalisation.
Comme illustré sur la figure 13, dans un mode de réalisation préféré,

- plus de 20%, de préférence plus de 30%, de préférence plus de 40%, de préférence plus de 50%, de préférence plus de 70%, de préférence plus de 90% en nombre, voire toutes les ouvertures supérieures de ladite strate inférieure sont des ouvertures totalement obturées par la grande face inférieure de la strate supérieure, et
- de préférence plus de 20%, de préférence plus de 30%, de préférence plus de 40%, de préférence plus de 50%, de préférence plus de 70%, de préférence plus de 90% en nombre, voire toutes lesdites ouvertures inférieures de ladite strate supérieure sont des ouvertures totalement obturées par la grande face supérieure de la strate inférieure, et
- de préférence les ouvertures supérieures et inférieures présentent sensiblement le même diamètre équivalent.

Ce mode est particulièrement bien adapté lorsque le fluide caloporteur est un gaz porté à haute pression, typiquement supérieure à 10 bar.
De préférence plus de 50%, plus de 70%, plus de 90%, de préférence 100% en nombre des couples de strates à passage de l'empilement ont une configuration présentant une ou plusieurs, de préférence toutes les caractéristiques de ce mode de réalisation.
Comme illustré sur la figure 14, dans un mode de réalisation préféré,

- plus de 20%, de préférence plus de 30%, de préférence plus de 40%, de préférence plus de 50%, de préférence plus de 70%, de préférence plus de 90%, de préférence plus de 95%, de préférence sensiblement 100% en nombre des ouvertures supérieures de ladite strate inférieure sont des ouvertures obturées, et
- plus de 70%, de préférence plus de 80%, de préférence plus de 90%, de préférence plus de 95%, sensiblement 100% desdites ouvertures supérieures obturées ne sont pas coaxiales avec une ouverture inférieure correspondante d'un conduit supérieur, et
- le rapport des surfaces d'une ouverture supérieure partiellement obturée (indépendamment de l'obturation) et de l'ouverture inférieure correspondante est supérieur à 0,1, voire supérieur à 0,5, voire supérieur à 0,9 et inférieur à 10, voire inférieur à 5, voire inférieur à 2, voire inférieur à 1,1.

De préférence, et en particulier si le fluide caloporteur est susceptible de circuler dans les deux sens, l'empilement comporte des obstacles actifs dans les deux sens. De préférence,

- plus de 20%, de préférence plus de 30%, de préférence plus de 40%, de préférence plus de 50%, de préférence plus de 70%, de préférence plus de 90%, de préférence plus de 95%, de préférence sensiblement 100% en nombre des ouvertures inférieures de ladite strate supérieure sont des ouvertures obturées par la grande face supérieure de la strate inférieure ; et
- plus de 70%, de préférence plus de 80%, de préférence plus de 90%, de préférence plus de 95%, voire sensiblement 100% desdites ouvertures inférieures obturées ne sont pas coaxiales avec une ouverture supérieure correspondante d'un conduit inférieur, et
- le rapport des surfaces d'une ouverture inférieure partiellement obturée (indépendamment de l'obturation) et de ladite ouverture supérieure correspondante est supérieur à 0,1, voire supérieur à 0,5, voire supérieur à 0,9 et inférieur à 10, voire inférieur à 5, voire inférieur à 2, voire inférieur à 1,1.

Le taux d'obturation est de préférence supérieur à 10%, de préférence supérieur à 20%, de préférence supérieur à 30%, de préférence supérieur à 40%, de préférence supérieur à 50%, voire supérieur à 60%, supérieur à 70%, supérieur à 80%, supérieur à 90%.

Le taux d'obturation est de préférence déterminé en fonction des contraintes de fonctionnement, et notamment de la perte de charge admissible dans l'unité de stockage de la chaleur.

De préférence, plus de 50%, plus de 70%, plus de 90%, de préférence 100% en nombre des couples de strates à passage de l'empilement ont une configuration présentant une ou plusieurs, de préférence toutes les caractéristiques de ce mode de réalisation.

De manière générale, le taux d'obturation, en moyenne sur un couple de strates à passage, est d'autant plus grand que ledit couple est à proximité d'une extrémité de l'empilement, la variation pouvant présenter des paliers sur plusieurs couples de strates à passages superposées. Lorsque plusieurs empilements sont disposés dans l'enceinte et agencés pour être traversés successivement par le fluide caloporteur, le taux d'obturation, en moyenne sur un couple de strates à passage, est de préférence d'autant plus grand que ledit couple est à proximité d'une extrémité de l'empilement le plus en amont et/ou le plus en aval, la variation pouvant présenter des paliers sur plusieurs couples de strates à passages superposées.

Brique

Le matériau constitutif des briques 40 est adapté aux fluides caloporteurs qui entrent en contact avec les briques. De préférence, il présente une résistance pyroscopique mesurée suivant la norme ISO 528 (1983), supérieure à la température de charge Tc + 50°C, voire supérieure à Tc + 100°C, voire supérieure à Tc + 150°C et inférieure à 1900°C, voire inférieure à 1800 °C, voire inférieure à 1700 °C, voire inférieure à 1650 °C, ce qui exclut ainsi tout risque d'affaissement.

Le matériau constitutif des briques présente de préférence une capacité calorifique à 25°C supérieure à 600 $J.°C^{-1}.kg^{-1}$, voire supérieure à 650 $J.°C^{-1}.kg^{-1}$, voire supérieure à 700 $J.°C^{-1}.kg^{-1}$. La capacité calorifique peut être mesurée suivant la norme ASTM E1269, par exemple au moyen d'un appareil d'analyse calorimétrique différentielle (« DSC » en anglais) Netzsch STA 409 CD.

De préférence, le matériau constitutif des briques est un matériau céramique. De préférence, il est constitué d'oxydes pour plus de 90% de sa masse, de préférence plus de 95%, de préférence plus de 99%, voire sensiblement 100%. De préférence encore, il contient plus de 50%, de préférence plus de 60%, de préférence plus de 70%, voire plus de 80% de zircone et/ou de magnésie et/ou d'alumine et/ou de spinelles alumino-magnésien, par exemple $MgAl_2O_4$, et/ou de stéatite, et/ou de forstérite $Mg_2SiO_4$, et/ou d'ilménite $FeTiO_3$, et/ou d'oxydes de fer, de préférence d'alumine et/ou d'oxydes de fer Dans un mode de réalisation, le complément massique à 100% comporte, voire est constitué pour plus de 90% de sa masse d'au moins un oxyde choisi parmi l'oxyde de bore, l'oxyde de sodium, les oxydes de cuivre, la silice et leurs mélanges.

De préférence, le matériau constitutif des briques présente l'analyse chimique suivante, en pourcentages massiques :

- 25% < $Fe_2O_3$ < 90%, et
- 5% < $Al_2O_3$ < 30%, et
- CaO < 20%, et
- $TiO_2$ < 25%, et
- 3% < $SiO_2$ < 50%, et
- $Na_2O$ < 10%, et
  pourvu que $Fe_2O_3 + Al_2O_3 + CaO + TiO_2 + SiO_2 + Na_2O$ > 80%, de préférence > 85%, voire > 90%, et
- Autres oxydes : complément à 100%.

De préférence, le matériau est un matériau fritté. De préférence, il présente une porosité ouverte supérieure à 4%, et/ou inférieure à 30%, de préférence inférieure à 25%, voire inférieure à 20%, voire inférieure à 15%.

Les formes et les dimensions des briques, et notamment des perforations, ne sont pas limitatives, pourvu qu'elles permettent un empilement dense, c'est-à-dire avec une fraction de vide faible, de préférence inférieure ou égale à 50%, de préférence inférieure ou égale à 40%, de préférence inférieure ou égale à 30%, voire inférieure ou égale à 20%.

De préférence, la masse d'une brique est supérieure à 10 kg et inférieure à 25 kg.

Dans le mode de réalisation préféré, la hauteur $H_{40}$ et/ou la largeur $l_{40}$ et/ou la longueur $L_{40}$ d'une brique est de préférence supérieure à 10 cm, voire supérieure à 15 cm, voire supérieure à 20 cm, voire supérieure à 25 cm et/ou de préférence inférieure à 80 cm, de préférence inférieure à 50 cm, de préférence inférieure à 40 cm.

De préférence, la brique est un profilé, c'est-à-dire que sa section transversale est constante sur sensiblement toute sa hauteur. Sa section transversale est délimitée extérieurement par un contour B, qui forme la base du cylindre qui définit le profilé et qui peut en particulier être polygonal, par exemple triangulaire, carré, rectangulaire hexagonale ou octogonal (voir figure 4c). De préférence la forme polygonale est régulière. Le contour peut également présenter des renflements ou des dépressions 64 locales (figure 5). De préférence, le contour B présente deux axes de symétrie, de préférence encore quatre axes de symétrie. Dans le mode de réalisation représenté sur la figure 4, ces axes de symétrie sont inclus dans quatre plans de symétrie $A_1$-$A_4$ s'étendant parallèlement aux faces latérales.

Le contour B est déterminé pour occuper de préférence plus de 80% et moins de 95% de la surface du plus petit carré C dans lequel il peut être inscrit (voir Figure 5).

Un conduit 48 peut prendre la forme d'une perforation 66 ou d'un trou interfacial 68 à l'interface entre plusieurs briques adjacentes d'une strate.

Dans un mode de réalisation préféré, la brique comporte une, de préférence une unique perforation 66 la traversant de part en part selon sa hauteur.

De préférence, le contour B de la section transversale des briques est conformé de manière qu'en plaçant côte-à-côte plusieurs dites briques, on forme, à l'interface entre les briques, des trous interfaciaux 68, traversant de préférence la strate sur toute sa hauteur, de préférence parallèles à la direction de la hauteur. De préférence, le contour est déterminé de manière à pouvoir former plus de 2, plus de 3, et/ou moins de 10, moins de 8, moins de 5 trous interfaciaux 68.

La brique peut ne pas être un profilé. En particulier, la section transversale (perpendiculaire à la direction de la hauteur) desdites perforations et desdits trous interfaciaux peut être variable sur la hauteur d'une brique, comme représenté sur les figures 3a-3c par exemple.

Le contour de la section transversale desdites perforations et desdits trous interfaciaux peut être constant ou variable sur la hauteur d'une brique. Il peut être notamment circulaire ou polygonal. Dans un mode de réalisation, les contours des sections transversales desdites perforations et desdits trous interfaciaux, respectivement, sont circulaires et polygonaux, de préférence carrés, respectivement, comme sur la figure 4.

La forme des perforations 66 et des trous interfaciaux 68 n'est pas limitative.

De préférence, une brique comporte un dispositif d'ancrage permettant de maintenir en position ladite brique par rapport aux briques adjacentes ou appartenant à une strate immédiatement supérieure et/ou inférieure.

De préférence, la brique comporte un, de préférence plusieurs pieds 54, faisant de préférence saillie de la face inférieure 55 ou de la face supérieure 70 de la brique et, de préférence, un, de préférence plusieurs logements 72, de préférence sur la face supérieure ou sur la face inférieure du brique, respectivement, de manière à recevoir les pieds d'une ou plusieurs briques d'une strate s'étendant immédiatement au-dessus ou au-dessous de ladite brique, respectivement. La coopération des pieds et des logements facilite le positionnement des briques et améliore la stabilité de l'empilement en permettant un ancrage des briques les unes sur les autres.

De préférence, la hauteur des pieds 54 est déterminée de manière à assurer un écartement axial (selon la direction X) $H_{52}$ entre les strates, et ainsi ménager les passages 52 entre les conduits.

De préférence, les briques de la strate inférieure et de la strate supérieure comportent au moins un pied et au moins un logement dont les dimensions et le positionnement permettent l'ajustement de la valeur de la hauteur du passage et/ou de la valeur du ou des obstacles et/ou de la valeur de l'espace de dilatation latéral.

De préférence, les briques de la strate supérieure et/ou de la strate inférieure

- comportent au moins un pied, de préférence au moins deux pieds, de préférence au moins trois pieds, dont l'extrémité libre est en appui sur la grande face supérieure et/ou inférieure de la strate inférieure et/ou de la strate supérieure, respectivement, de manière à définir ledit passage, et est de préférence logée dans un logement d'une brique définissant partiellement ladite grande face inférieure et/ou supérieure, respectivement, et/ou
- comportent une base à plus de trois côtés, de préférence carrée, hexagonale ou octogonale,
- présentent au moins une perforation définissant un conduit, de préférence rectiligne.

La figure 4b représente une brique dans un mode de réalisation préféré.

La brique 40 est profilée suivant l'axe X, définissant la direction de la hauteur. Latéralement, la brique 40 est délimitée par une surface latérale 76 constituée de 8 faces latérales. Les faces latérales comportent quatre petites faces latérales 76a identiques et quatre grandes faces latérales 76b identiques, en alternance avec les petites faces latérales 76a. Chaque petite face latérale 76a, respectivement grande face latérale 76b, est en regard et parallèle à une autre petite face latérale 76a, respectivement grande face latérale 76b. Observée suivant l'axe X, la brique présente ainsi une section délimitée extérieurement par un contour B sensiblement carré, dont les angles sont coupés par les petites faces 76a, l'angle interne entre deux faces latérales consécutives étant égal à 135°. Dans un mode de réalisation non représenté, le contour B forme un octogone régulier, les 8 cotés présentant la même longueur et l'angle interne entre deux côtés consécutifs est égal à 135°.

La brique 40 présente une perforation 66 le traversant sensiblement en son centre, de part en part, selon la hauteur, entre une face inférieure 62 et une face supérieure 64, sensiblement en regard et parallèles l'une à l'autre.

La perforation centrale 66 est sensiblement cylindrique, de section sensiblement polygonale, de préférence octogonale. Elle s'étend parallèlement à l'axe X, c'est-à-dire sensiblement perpendiculairement aux faces inférieure 62 et supérieure 64.

La section transversale de la perforation centrale est de préférence inférieure à 0,6 fois, de préférence inférieure à 0,5 fois, de préférence inférieure à 0,4 fois, de préférence inférieure à 0,3 fois, de préférence inférieure à 0,25 fois et, de préférence, supérieure à 0,1 fois, de préférence supérieure à 0,15 fois la section de la brique dans le plan de ladite section.

En coopération avec trois briques adjacentes, chaque brique permet de fabriquer quatre trous interfaciaux 68 qui s'étendent selon toute la hauteur de la strate contenant lesdites briques.

Dans un mode de réalisation non représenté, les briques sont montées de manière que les perforations 66 soient sensiblement alignées d'une strate à la suivante, de préférence avec un recouvrement partiel afin de créer des obstacles. Avantageusement, les pertes de charge en sont limitées.

Dans le mode de réalisation représenté sur la figure 4, les briques sont montées de manière qu'au moins une partie des perforations 66 ne soient pas alignées d'une strate à la suivante (désaxage). De préférence, les perforations 66 d'une strate débouchent dans des trous interfaciaux 68 d'une strate adjacente, de préférence avec un recouvrement partiel afin de créer des obstacles. Avantageusement, les échanges thermiques en sont améliorés.

Dans le mode de réalisation représenté sur la figure 4, chaque brique comporte, sur sa face supérieure, quatre logements 72 venant coopérer avec quatre pieds 54 faisant saillie de la face inférieure de briques de la strate immédiatement supérieure, la hauteur des pieds 54 étant supérieure à la profondeur des logements 72 afin de créer les passages 52.

De préférence, dans un mode de réalisation préféré, une brique

- comporte une face supérieure, une face inférieure, de préférence parallèle à ladite face supérieure, et une surface latérale s'étendant, sensiblement selon un cylindre virtuel, entre lesdites faces supérieure et inférieure et de préférence perpendiculairement aux dites faces supérieure et inférieure, ledit cylindre virtuel ayant une base présentant de préférence une forme générale polygonale, de préférence présentant au moins huit côtés, de préférence octogonale à deux axes de symétrie perpendiculaires l'un à l'autre, de préférence à quatre axes de symétrie équiangulairement répartis autour d'un centre d'intersection commun, avec de préférence quatre petits côtés de même longueur et quatre grands côtés de même longueur, la base étant de préférence déterminée pour occuper plus de 70% et moins de 95% de la surface du plus petit carré dans lequel elle peut être inscrite, et
- comporte de préférence une perforation traversant ladite brique, de préférence en son centre, de préférence sensiblement parallèlement à ladite surface latérale, et débouchant sur lesdites faces supérieure et inférieure de la brique, et
- comporte de préférence un pied, de préférence au moins deux pieds, de préférence au moins trois pieds, faisant saillie de ladite face supérieure ou de ladite face inférieure, et comporte de préférence un logement, de préférence au moins deux logements, de préférence au moins trois logements, de préférence le même nombre de logements que le nombre de pieds, sur la face opposée à la face présentant les pieds en saillie, de manière à ce que les pieds d'une autre brique identique puisse se loger dans lesdits logements (ce qui ne signifie pas que, dans un empilement, la brique soit nécessairement assemblée à des briques identiques).

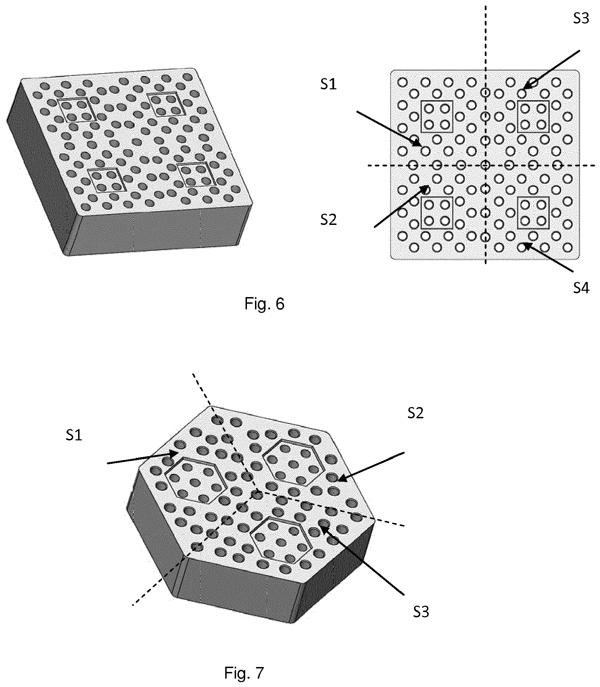

Les figures 6 et 7 représentent des briques dans un autre mode de réalisation préféré.

Dans ce mode de réalisation particulier, la brique:

- comporte une face supérieure, une face inférieure, de préférence parallèle à ladite face supérieure, et une surface latérale s'étendant, sensiblement selon un cylindre virtuel, entre lesdites faces supérieure et inférieure et de préférence perpendiculairement aux dites faces supérieure et inférieure, le cylindre virtuel ayant une base de préférence polygonale, de préférence carrée, hexagonale ou octogonale, de préférence hexagonale, de préférence de forme régulière, et
- comporte plusieurs perforations, traversant ladite brique, de préférence sensiblement parallèlement à ladite surface latérale, et débouchant sur lesdites faces supérieure et inférieure de la brique, le nombre desdites perforations étant de préférence supérieur à 20, de préférence supérieur à 30, de préférence supérieur à 40, de préférence supérieur à 50, de préférence supérieur à 60, plus de 50%, de préférence plus de 70%, de préférence plus de 90%, de préférence sensiblement toutes les perforations présentant chacune un diamètre équivalent moyen supérieur à 5 mm, de préférence supérieur à 10 mm et de préférence inférieur à 25 mm, de préférence inférieur à 20 mm, et
- comporte de préférence au moins un pied, de préférence au moins deux pieds, de préférence au moins trois pieds

faisant saillie de ladite face supérieure ou de ladite face inférieure, et comporte de préférence au moins un logement, de préférence au moins deux logements, de préférence au moins trois logements, de préférence le même nombre de logements que le nombre de pieds, sur la face opposée à la face présentant les pieds en saillie, de manière à ce que les pieds d'une autre brique identique puisse se loger dans lesdits logements, et

- présente une fraction volumique de vide inférieure ou égale à 60%, de préférence inférieure ou égale à 50%, de préférence inférieure ou égale à 40%, de préférence inférieure ou égale à 30%, de préférence inférieure ou égale à 25%, voire inférieure ou égale à 20% et/ou supérieure ou égale à 10%, de préférence supérieure ou égale à 15%, et

- présente de préférence une conformation permettant de modifier le taux d'obturation en fonction de la disposition de la brique, de préférence en fonction de la position angulaire de ladite brique autour de son centre et, de préférence, sans avoir besoin de modifier la disposition de briques identiques adjacentes de la même strate (autrement dit, l'espace occupé par la brique est identique dans plusieurs dispositions différentes, correspondant à des taux d'obturation différents) ; et

- présente de préférence une masse comprise entre 10 kg et 25 kg.

Dans ce mode de réalisation préféré, la forme des perforations peut être quelconque. De préférence, les perforations sont cylindriques, de préférence de base circulaire et/ou oblongue, de préférence de base circulaire.

Les perforations peuvent être réparties de manière irrégulière dans la brique. De préférence, lorsque la face supérieure d'une brique est observée, les perforations peuvent être réparties en une pluralité de secteurs S1-S4 (figures 6 et 7), délimités par des lignes passant par des perforations, ces derniers étant considérés comme n'appartenant à aucun secteur.

De préférence, le nombre de secteurs est supérieur ou égal à 2, à 3 ou à 4.

De préférence, les perforations sont réparties de manière régulière dans chaque secteur. Au sein d'un secteur quelconque, les perforations forment de préférence, sur la face supérieure ou inférieure de la brique, un motif symétrique par rapport au centre du secteur considéré. Les motifs peuvent être identiques dans plusieurs secteurs. Par exemple, sur la figure 6, les motifs des secteurs S1 et S4 peuvent être identiques et les motifs des secteurs S2 et S3 peuvent être identiques. Tous les secteurs peuvent également présenter des motifs différents, comme sur la figure 7.

De préférence, au moins une perforation est écartée des perforations adjacentes d'une distance variable en fonction de la perforation adjacente considérée.

Cette conformation est particulièrement avantageuse car elle permet de faire varier facilement le taux d'obturation cumulé pour l'ensemble des perforations de la brique, par simple rotation de cette brique.

Par exemple, si un empilement est constitué de briques de forme hexagonale présentant 3 secteurs, telles que représentées sur la figure 7, le taux d'obturation cumulé pour l'ensemble des perforations sera différent selon qu'un secteur d'une brique de la strate supérieure, par exemple le secteur A repose sur le secteur B ou le secteur C d'une brique de la strate inférieure. Une telle brique selon l'invention permet ainsi, en fonction des différents motifs choisis pour chacun des secteurs, de facilement régler le taux d'obturation en choisissant les secteurs qui se superposent. Avantageusement encore, une rotation de 120° ou de 240° d'une brique permet son repositionnement dans le même espace que celui qu'elle occupait initialement.

La fabrication des briques peut s'effectuer selon toute technique de mise en forme connue de l'homme du métier, et notamment par extrusion, pressage ou coulage. De préférence, les briques sont fabriquées par extrusion ou par pressage.

Les briques sont ensuite de préférence traitées thermiquement de manière à les fritter. Les conditions de frittage, entre autres la température maximale atteinte, le temps de maintien à cette température, les vitesses de montée et de descente en température, l'atmosphère sont fonction du matériau constituant la brique. Dans un mode de réalisation, le matériau constitutif de la brique contient plus de 50%, de préférence plus de 60%, de préférence plus de 70%, voire plus de 80% en masse d'oxydes de fer et le cycle de frittage présente une température maximale atteinte comprise entre 1050°C et 1450°C, voire entre 1050°C et 1350°C, et le temps de maintien en palier à cette température est compris entre 15 minutes et 12 heures.

L'assemblage des briques ne pose pas de difficulté particulière et peut être effectué suivant les techniques habituelles.

Les briques selon le mode de réalisation de la figure 4 permettent un empilement particulièrement dense, la fraction de vide étant faible. Les vides sont limités aux perforations 66, aux trous interfaciaux 68, aux passages 52 et aux espaces de dilatation.

Elles permettent également de créer facilement et rapidement des obstacles efficaces pour détourner du fluide caloporteur vers les passages 52.

En outre, leur forme géométrique facilite leur assemblage.

Enfin leurs pieds 54 permettent un empilement avec ou sans décalage latéral d'une strate à l'autre, la création rapide et précise de passages 52 et d'espaces de dilatation, ainsi que, en coopération avec les logements 72, une bonne stabilisation de l'empilement.

Le taux d'obturation est de préférence choisi en fonction des contraintes de fonctionnement, et notamment de la perte de charge admissible dans l'unité de stockage de la chaleur.

Fonctionnement

Lors de la **charge,** le fluide caloporteur de charge entre dans l'unité de stockage thermique à une température de charge Tc, de préférence sensiblement constante, en général par la partie haute de l'unité de stockage thermique. La température de charge est de préférence inférieure à 1000 °C, voire inférieure à 800 °C et supérieure à 350 °C, voire supérieure à 500 °C.

Le fluide caloporteur de charge est par exemple injecté dans l'empilement par l'ouverture inférieure 44, puis pénètre dans les conduits inférieurs 48 d'une strate inférieure 46. Sa circulation est entravée par les obstacles 57 qui avantageusement augmentent la surface d'échange thermique. Selon l'invention, les obstacles 57 détournent une partie du flux de fluide caloporteur vers les passages 52 de manière que cette partie du flux rejoigne des conduits supérieurs 48' d'une strate supérieure 46' adjacente. L'efficacité du transfert thermique en est avantageusement considérablement augmentée.

Le fluide caloporteur de charge réchauffe les briques avec lesquels il est en contact. Sa température baisse donc progressivement.

La faible fraction de vide de l'empilement confère une grande capacité de stockage thermique.

De préférence la température à laquelle le fluide caloporteur de charge sort de l'unité de stockage thermique, en début de charge, est proche de la température de décharge du cycle précédent.

Lors de la **décharge,** le fluide caloporteur de décharge entre dans l'unité de stockage thermique à une température de décharge, de préférence sensiblement constante, par exemple par la partie supérieure de l'unité de stockage thermique. Classiquement, en régime stabilisé, la température est proche de la température des briques avec lesquels il entre alors en contact et le fluide caloporteur se réchauffe rapidement à cette dernière température. La température de décharge est de préférence inférieure à la température de charge, par exemple de plus de 100°C, de plus de 200°C ou de plus de 300°C.

Le fluide caloporteur poursuit ensuite son trajet dans l'unité de stockage thermique, en refroidissant les briques avec lesquels il est en contact. Sa température augmente donc progressivement. Les échanges thermiques sont similaires à ceux rencontrés lors de la phase de charge si le circuit suivi par les flux de fluides caloporteurs de charge et de décharge sont similaires.

L'unité de stockage thermique subit donc une succession de « cycles », chaque cycle comportant une phase de charge, éventuellement une phase d'attente, puis une phase de décharge. La durée d'un cycle régulier est généralement supérieure à 0,5 heure, voire supérieure à deux heures et/ou inférieure à 48 heures, voire inférieure à 24 heures.

**Exemples**

Les exemples suivants sont fournis à des fins illustratives et non limitatives.

Les hypothèses suivantes ont été utilisées pour effectuer les calculs de l'énergie calorifique restituée par le régénérateur ainsi que l'évolution de la température de sortie de l'air en charge et en décharge :

- Modèle unidimensionnel :

  - Ecoulement et transfert thermique en convection forcée dans l'empilement, l'effet de la gravité étant négligé,
  - Température et vitesse de fluide constantes dans une section transversale de l'empilement,
  - Pertes thermiques et influence de la paroi de l'enceinte sur l'écoulement négligeables,
  - Répartition uniforme de la température et de l'écoulement de fluide sur la face supérieure (lors de la charge) et sur la face inférieure (lors de la décharge) de l'empilement,
  - Résistance nulle à la diffusion de la chaleur dans le matériau des éléments de stockage d'énergie,

- empilement de forme cylindrique, de section constante, de diamètre égal à 9 m et de volume égal à 1909 $m^3$,
- éléments de stockage d'énergie : en vrac pour l'exemple 1, hors invention, la fraction de vide étant égale à 40%, et sous la forme de briques empilées sous forme de strates pour les autres exemples :

  - pour l'exemple 2, hors invention, 13,5 strates par mètre, chaque strate étant séparée des strates adjacentes par un espace d'une hauteur égale à 4 mm s'étendant horizontalement, chaque strate étant composée de briques présentant des perforations de diamètre égal à 12 mm, chaque strate présentant une densité surfacique de perforations égale à 1500 par $m^2$, l'empilement de strates ne présentant aucun obstacle (taux d'obturation nul), la fraction de vide étant égale à 20%,

■ pour l'exemple 3, hors invention, 14,2 strates par mètre, lesdites strates étant empilées sans présence d'espace entre lesdites strates, chaque strate étant composée de briques présentant des perforations de diamètre égal à 12 mm, chaque strate présentant une densité surfacique de perforations égale à 1500 par m$^2$, l'empilement de strates étant tel que chaque perforation présente un taux d'obturation de 67%, tel que représenté dans le schéma de principe de la figure 8, la fraction de vide étant égale à 17%,

■ pour l'exemple 4, selon l'invention, 13,5 strates par mètre, chaque strate étant séparée d'une autre par un espace d'une hauteur égale à 4 mm s'étendant horizontalement, chaque strate étant composée de briques présentant des perforations de diamètre égal à 12 mm, chaque strate présentant une densité surfacique de perforations égale à 1500 par m$^2$, l'empilement de strates étant tel que chaque perforation présente un taux d'obturation de 67%, tel que représenté dans le schéma de principe de la figure 9, la fraction de vide étant égale à 20%,

■ pour l'exemple 5, selon l'invention, 13,5 strates par mètre, chaque strate étant séparée d'une autre par un espace d'une hauteur égale à 4 mm s'étendant horizontalement, chaque strate étant composée de briques présentant des perforations de diamètre égal à 12 mm, chaque strate présentant une densité surfacique de perforations égale à 1500 par m$^2$, l'empilement de strates étant tel que la moitié des perforations sont totalement obturées (taux d'obturation de 100%), tel que représenté dans le schéma de principe de la figure 10, la fraction de vide étant égale à 20%,

■ pour l'exemple 6, selon l'invention, 13,5 strates par mètre, chaque strate étant séparée d'une autre par un espace d'une hauteur égale à 4 mm s'étendant horizontalement, chaque strate étant composée de briques présentant des perforations de diamètre égal à 12 mm, chaque strate présentant une densité surfacique de perforations égale à 1500 par m$^2$, l'empilement de strates étant tel que la totalité des perforations sont totalement obturées (taux d'obturation de 100%), tel que représenté dans le schéma de principe de la figure 11, la fraction de vide étant égale à 20%,

■ pour les calculs des tableaux 4, 5 et 6, 13,5 strates par mètre, chaque strate étant séparée d'une autre par un espace d'une hauteur égale à 4 mm s'étendant horizontalement, chaque strate étant composée de briques présentant des perforations de diamètre égal à 12 mm, chaque strate présentant une densité surfacique de perforations égale à 1500 par m$^2$, l'empilement de strates définissant un pourcentage de couples de strates à passages ainsi qu'un pourcentage d'ouvertures obturées à 100% dans chaque couple de strates à passage, le complément étant des ouvertures non obturées, la fraction de vide étant égale à 20%,

- fluide caloporteur de charge et de décharge : air sec,
- volume d'éléments de stockage d'énergie constant,
- pas de pertes thermiques radiales,
- température d'entrée en charge, $T_{ec}$, égale à 800°C, soit 1073 K,
- température d'entrée en décharge, $T_{ed}$, égale à 400°C, soit 673 K,
- pression interne égale à 10 bar,
- en charge, le débit du fluide est constant et égal à 150 kg/s,
- en décharge, le débit du fluide est constant et égal à 75 kg/s,
- durée de la charge : 5 heures,
- durée de la décharge : 10 heures,
- composition du matériau fritté des éléments de stockage d'énergie :

Tableau 1

| Analyse chimique des éléments de stockage d'énergie | |
|---|---|
| % oxyde de fer exprimé sous la forme $Fe_2O_3$ | 65 |
| % $Al_2O_3$ | 7 |
| % CaO | 0,7 |
| % $TiO_2$ | 0,7 |
| % $SiO_2$ | 24 |
| % autres oxydes | 2,6 |
| Autres caractéristiques des éléments de stockage d'énergie | |
| Masse volumique apparente du matériau des éléments de stockage (g/cm$^3$) | 3,2 |
| Porosité ouverte (%) | 4 |
| Cp à 25 °C (J kg$^{-1}$ K$^{-1}$) | 650 |

(suite)

| Autres caractéristiques des éléments de stockage d'énergie | |
|---|---|
| Cp à 400°C (J kg⁻¹ K⁻¹) | 880 |
| Cp à 800°C (J kg⁻¹ K⁻¹) | 910 |

Soit

$T_{sd}$, la température de sortie en décharge, variable au cours de la durée de la décharge,

$T_{SD}$, la température moyenne de sortie en décharge, la durée de décharge étant égale à 10 heures.

On appelle « efficacité » de l'unité de stockage thermique, le rapport E suivant, exprimé en pourcentage :

$$E = (T_{SD} - T_{ed}) / (T_{ec} - T_{ed}).$$

Plus le rapport E tend vers 100%, plus l'unité de stockage thermique est performante.

Les résultats de la simulation effectuée figurent dans le tableau 2 suivant :

Tableau 2

| Exemple | Efficacité (%) |
|---|---|
| 1 | 91,9 |
| 2 | 94,2 |
| 3 | inexploitable |
| 4 | 95,5 |
| 5 | 95,5 |
| 6 | 97,2 |

Les unités de stockage thermique des exemples 4, 5 et 6 présentent une amélioration remarquable de l'efficacité par rapport à l'unité de stockage thermique selon les exemples 1 et 2.

L'unité de stockage de l'exemple 3 est inexploitable du fait d'une perte de charge trop élevée.

Les résultats du tableau 3 suivant montrent la variation de volume de l'unité de stockage réalisable pour une efficacité recherchée égale à 90% et 95%, l'unité de stockage thermique de l'exemple 2 étant prise comme référence, une variation de volume négative correspondant à une diminution de volume :

Tableau 3

| Exemple | Variation de volume de l'unité de stockage thermique pour une efficacité recherchée égale à 90% (%) | Variation de volume de l'unité de stockage thermique pour une efficacité recherchée égale à 95% (%) |
|---|---|---|
| 1 | +21,7 | +13,3 |
| 2 | référence | référence |
| 4 | -12,3 | -23 |
| 5 | -6,9 | -12,7 |
| 6 | -14,3 | -26,8 |

Les unités de stockage thermique des exemples 4, 5, 6 présentent un volume réduit de 12,3%, 6,9% et 14,3%, respectivement, par rapport à l'unité de stockage de l'exemple 2 lorsqu'une efficacité égale à 90% est recherchée.

Les unités de stockage thermique des exemples 4, 5, 6 présentent un volume réduit de 23%, 12,7% et 26,8%, respectivement, par rapport à l'unité de stockage de l'exemple 2 lorsqu'une efficacité égale à 95% est recherchée.

Cette réduction de volume de l'unité de stockage thermique s'accompagne avantageusement d'une réduction des couts d'investissement.

Les résultats des tableaux 4, 5 et 6 suivants montrent les effets conjugués du pourcentage de couples de strates à passage dans l'empilement et, dans un couple de strates à passage quelconque, du pourcentage en nombre d'ouvertures obturées. Ils permettent en particulier de constater que l'efficacité augmente sensiblement lorsque le pourcentage de couples de strates à passages de l'empilement dépasse 20% et que le nombre d'ouvertures obturées de chaque strate à passages dépasse 20%.

Tableau 4

| Efficacité (%) | | Pourcentage de couples de strates à passages (%) | | | | |
|---|---|---|---|---|---|---|
| | | 0 | 20 | 50 | 70 | 100 |
| Pourcentage d'ouvertures obturées à 100% dans chaque couple de strates à passages | 0 | 94,2 | 94,2 | 94,2 | 94,2 | 94,2 |
| | 20 | 94,2 | 94,4 | 94,4 | 94,4 | 94,5 |
| | 50 | 94,2 | 94,6 | 95,0 | 95,2 | 95,5 |
| | 70 | 94,2 | 94,8 | 95,5 | 95,8 | 96,3 |
| | 100 | 94,2 | 95,3 | 96,3 | 96,7 | 97,2 |

Tableau 5

| Gain de volume pour une efficacité recherchée égale à 90% référence : ex 2 | | Pourcentage de couples de strates à passages (%) | | | | |
|---|---|---|---|---|---|---|
| | | 0 | 20 | 50 | 70 | 100 |
| Pourcentage d'ouvertures obturées à 100% dans chaque couple de strates à passages | 0 | 0,0 | 0,0 | 0,0 | 0,0 | 0,0 |
| | 20 | 0,0 | 0,3 | 0,8 | 1,0 | 1,5 |
| | 50 | 0,0 | 1,9 | 4,1 | 5,3 | 6,9 |
| | 70 | 0,0 | 3,4 | 6,9 | 8,6 | 10,7 |
| | 100 | 0,0 | 5,9 | 10,7 | 12,5 | 14,3 |

Tableau 6

| Gain de volume pour une efficacité recherchée égale à 95% référence : ex 2 | | Pourcentage de couples de strates à passages (%) | | | | |
|---|---|---|---|---|---|---|
| | | 0 | 20 | 50 | 70 | 100 |
| Pourcentage d'ouvertures obturées à 100% dans chaque couple de strates à passages | 0 | 0,0 | 0,0 | 0,0 | 0,0 | 0,0 |
| | 20 | 0,0 | 0,5 | 1,5 | 1,9 | 2,8 |
| | 50 | 0,0 | 3,7 | 4,6 | 9,7 | 12,7 |
| | 70 | 0,0 | 6,3 | 12,7 | 15,8 | 20,1 |
| | 100 | 0,0 | 10,8 | 20,1 | 23,6 | 26,8 |

Bien entendu, la présente invention n'est pas limitée aux modes de réalisation décrits et représentés, fournis à titre d'exemples. En particulier, des combinaisons des différents modes de réalisation décrits ou représentés entrent également dans le cadre de l'invention. En particulier, sur les figures 6 et 7, la brique présente une conformation permettant de modifier le taux d'obturation en fonction de sa disposition, de préférence en fonction de sa position angulaire autour de son centre ou de son axe, et, de préférence, sans avoir besoin de modifier la disposition de briques identiques adjacentes de la même strate. Une telle conformation est cependant également possible avec d'autres types de briques, et notamment avec des briques qui ne comportent qu'une unique perforation.

L'invention n'est pas limitée non plus par la forme ou les dimensions de l'empilement.

**Revendications**

1. Unité de stockage thermique comportant :

- une enceinte (41) comportant des orifices (42 ; 44) autorisant une introduction et une extraction d'un fluide caloporteur dans ladite enceinte, et

- un empilement de briques constituées de préférence en un matériau présentant une capacité calorifique à 25°C supérieure à 600 J.°C$^{-1}$.kg$^{-1}$, lesdites briques étant disposées dans ladite enceinte sous la forme de strates (46 ; 46') superposées, chaque strate présentant des grandes faces inférieure (47a ; 47a') et supérieure (47b ; 47b') et définissant une pluralité de conduits (48 ; 48') débouchant chacun par des ouvertures inférieure (49a ; 49a') et supérieure (49b ; 49b') sur lesdites grandes faces inférieure et supérieure, respectivement,

l'empilement comportant un couple de strates constitué d'une strate inférieure (46) et d'une strate supérieure (46') superposée à ladite strate inférieure,

ledit couple de strates, dit « couple de strates à passage », étant tel que :

- les grandes faces supérieure (47b) et inférieure (47a') de ladite strate inférieure et de ladite strate supérieure, respectivement, sont écartées l'une de l'autre de manière à définir un passage (52) mettant en communication de fluide une ouverture supérieure (49b) d'un conduit inférieur (48) de ladite strate inférieure et au moins une ouverture inférieure, entièrement décalée par rapport à ladite ouverture supérieure (49b), d'au moins un conduit supérieur de ladite strate supérieure,

- la grande face inférieure (47a') de la strate supérieure obture, au moins en partie, ladite ouverture supérieure (49b), dite « ouverture supérieure obturée », lorsque ladite ouverture supérieure (49b) est observée, suivant son axe, depuis ledit conduit inférieur (48),

lesdites briques étant conformées et agencées de manière que ledit empilement présente une fraction volumique de vide inférieure ou égale à 60%,

plus de 20% en nombre des ouvertures supérieures de ladite strate inférieure étant des ouvertures supérieures obturées,

plus de 20% en nombre des couples de strates superposées de l'empilement étant chacun un dit couple de strates à passage.

2. Unité de stockage thermique selon la revendication immédiatement précédente, dans laquelle plus de 50%, de préférence plus de 70%, de préférence plus de 90%, de préférence 100% en nombre des couples de strates superposées de l'empilement forment chacun des couples de strates à passage.

3. Unité de stockage thermique selon l'une quelconque des revendications précédentes, dans laquelle, pour au moins un couple de strates à passage, de préférence pour tout couple de strates à passage, le taux d'obturation d'une ouverture supérieure obturée, de préférence de toute ouverture supérieure obturée, est supérieur à 10%, de préférence supérieur à 90%.

4. Unité de stockage thermique selon l'une quelconque des revendications précédentes, dans laquelle pour au moins un couple de strates à passage, de préférence pour tout couple de strates à passage, plus de 95% en nombre des ouvertures supérieures de la strate inférieure dudit couple de strates à passage sont des ouvertures supérieures obturées.

5. Unité de stockage thermique selon l'une quelconque des revendications précédentes, dans laquelle pour au moins un couple de strates à passage, de préférence pour tout couple de strates à passage, plus de 70%, de préférence plus de 95% en nombre des ouvertures supérieures obturées des conduits inférieurs de la strate inférieure dudit couple de strates à passage font face à une ouverture inférieure, dite « correspondante », d'un conduit supérieur de la strate supérieure dudit couple de strates à passage, le rapport des surfaces d'une ouverture supérieure obturée et de ladite ouverture inférieure correspondante étant supérieur à 0,1 et inférieur à 0,9, ou supérieur à 1,1 et inférieur à 10.

6. Unité de stockage thermique selon la revendication immédiatement précédente, dans laquelle pour au moins un couple de strates à passage, de préférence pour tout couple de strates à passage, plus de 70%, de préférence plus de 95% en nombre des ouvertures supérieures obturées dudit couple de strates à passage sont coaxiales à une ouverture inférieure correspondante.

7. Unité de stockage thermique selon la revendication 4, dans laquelle pour au moins un couple de strates à passage, de préférence pour tout couple de strates à passage, plus de 70%, de préférence plus de 95% en nombre des ouvertures supérieures obturées dudit couple de strates à passage ne sont pas coaxiales à une ouverture inférieure correspondante.

**8.** Unité de stockage thermique selon l'une quelconque des revendications 1 à 3, dans laquelle pour au moins un couple de strates à passage, de préférence pour tout couple de strates à passage, le taux d'obturation de ladite ouverture supérieure obturée dudit couple de strates à passage est de 100%.

**9.** Unité de stockage thermique selon l'une quelconque des revendications précédentes, dans laquelle pour au moins un couple de strates à passage, de préférence pour tout couple de strates à passage, la grande face supérieure dudit couple de strates à passage de la strate inférieure obture, au moins en partie, une ouverture inférieure de la strate supérieure dudit couple de strates à passage, dite « ouverture inférieure obturée », lorsque ladite ouverture inférieure est observée, suivant son axe, depuis ledit conduit supérieur.

**10.** Unité de stockage thermique selon la revendication immédiatement précédente, dans laquelle pour au moins un couple de strates à passage, de préférence pour tout couple de strates à passage, le rapport du nombre des ouvertures supérieures obturées dudit couple de strates à passage sur le nombre des ouvertures inférieures obturées dudit couple de strates à passage est compris entre 0,7 et 1,3, de préférence compris entre 0,9 et 1,1.

**11.** Unité de stockage thermique selon l'une quelconque des revendications précédentes, dans laquelle pour au moins un couple de strates à passage, de préférence pour tout couple de strates à passage, le passage dudit couple de strates à passage, de préférence tout passage, s'étend sensiblement horizontalement.

**12.** Unité de stockage thermique selon l'une quelconque des revendications précédentes, dans laquelle pour au moins un couple de strates à passage, de préférence pour tout couple de strates à passage, la hauteur maximale ($H_{52}$) du passage dudit couple de strates à passage est supérieure à 1 mm et inférieure à 3 cm.

**13.** Unité de stockage thermique selon l'une quelconque des revendications précédentes, dans laquelle pour au moins un couple de strates à passage, de préférence pour tout couple de strates à passage, le taux d'obturation, en moyenne sur ledit couple de strates à passage, est d'autant plus grand que ledit couple est à proximité d'une extrémité de l'empilement, la variation pouvant présenter des paliers sur plusieurs couples de strates à passages superposées.

**14.** Unité de stockage thermique selon l'une quelconque des revendications précédentes, plus de 5% des briques de l'empilement étant chacune une « brique perforée »

  - délimitée par une face supérieure (70), une face inférieure (55), de préférence parallèle à ladite face supérieure, et une surface latérale (76) s'étendant, sensiblement selon un cylindre virtuel, entre lesdites faces supérieure et inférieure et de préférence perpendiculairement aux dites faces supérieure et inférieure, et
  - comportant une perforation (66) traversant ladite brique perforée et débouchant sur lesdites faces supérieure et inférieure,

la perforation et la surface latérale de la brique perforée étant conformées de manière que, dans un couple de strates constitué de dites briques perforées agencées sous la forme d'une strate inférieure (46) compacte et d'une strate supérieure (46') compacte superposée à ladite strate inférieure, tout ou partie des trous interfaciaux (68) entre les briques perforées de la strate inférieure correspondent avec des perforations de briques perforées de la strate supérieure, et/ou tout ou partie des trous interfaciaux entre les briques de la strate supérieure correspondent avec des perforations de briques perforées de la strate inférieure, un trou interfacial d'une strate étant un conduit ménagé entre les briques de ladite strate et débouchant sur des grandes faces inférieure (47a) et supérieure (47b) de ladite strate, une correspondance entre un trou interfacial et une perforation correspondant à une obturation partielle d'au moins une des ouvertures du trou interfacial et de la perforation en regard, une strate étant compacte lorsque les briques qui la constituent occupent un volume minimal.

**15.** Unité de stockage thermique selon la revendication précédente, dans laquelle la base du cylindre est conformée pour occuper plus de 70% et moins de 95% de la surface du plus petit carré dans lequel elle peut être inscrite, et/ou ladite brique perforée présente une fraction volumique de vide inférieure ou égale à 60% et supérieure ou égale à 10%.

**16.** Unité de stockage thermique selon l'une quelconque des deux revendications immédiatement précédentes, dans laquelle la base du cylindre est octogonale et présente quatre grands côtés parallèles deux à deux et quatre petits côtés parallèles deux à deux, chaque petit côté étant adjacent à deux grands côtés.

**17.** Unité de stockage thermique selon l'une quelconque des revendications 1 à 13, plus de 5% des briques de l'empilement étant chacune une « brique perforée »

- délimitée par une face supérieure (70), une face inférieure (55), de préférence parallèle à ladite face supérieure, et une surface latérale (76) s'étendant, sensiblement selon un cylindre virtuel, entre lesdites faces supérieure et inférieure et de préférence perpendiculairement aux dites faces supérieure et inférieure, ledit cylindre virtuel ayant de préférence une base de forme carrée, hexagonale ou octogonale, et
- comportant plus de 20 perforations (66) traversant ladite brique perforée et débouchant sur lesdites faces supérieure et inférieure, et
- présentant une fraction volumique de vide inférieure ou égale à 60% et supérieure ou égale à 10%,

les perforations étant conformées et/ou réparties, et la géométrie de la brique perforée étant conformée de manière que, dans un couple de strates constitué d'une strate inférieure (46) compacte constituée de dites briques perforées et d'une strate supérieure (46') compacte superposée à ladite strate inférieure, chaque dite brique perforée puisse occuper le même espace dans plusieurs positions opérationnelles, de préférence au nombre de 2, 3 ou 4, le taux d'obturation moyen des ouvertures supérieures des perforations de chaque dite brique perforée étant variable en fonction de la position opérationnelle adoptée.

**18.** Unité de stockage thermique selon la revendication immédiatement précédente,

- dans laquelle plus de 50% en nombre des perforations présentent chacune un diamètre équivalent moyen supérieur à 5 mm et inférieur à 25 mm, et/ou
- dans laquelle la densité surfacique de perforations à la surface supérieure de la brique est supérieure à 1000, de préférence supérieure à 1200, de préférence supérieure à 1400 perforations par mètre carré.

**19.** Unité de stockage thermique selon l'une quelconque des revendications 14 à 18, ladite brique perforée

- comportant un pied faisant saillie de ladite face supérieure ou de ladite face inférieure, et un logement sur la face opposée à la face présentant le pied, de manière à ce qu'un pied d'une autre brique identique puisse se loger dans ledit logement ; et/ou
- étant constituée en un matériau présentant l'analyse chimique suivante, en pourcentages massiques :

  - $25\% < Fe_2O_3 < 90\%$, et
  - $5\% < Al_2O_3 < 30\%$, et
  - $CaO < 20\%$, et
  - $TiO_2 < 25\%$, et
  - $3\% < SiO_2 < 50\%$, et
  - $Na_2O < 10\%$,
  pourvu que $Fe_2O_3 + Al_2O_3 + CaO + TiO_2 + SiO_2 + Na_2O > 80\%$, de préférence > 85%, voire > 90%, et
  - Autres oxydes : complément à 100%, et/ou

- présentant une masse supérieure à 10 kg et inférieure à 25 kg.

**20.** Installation thermique comportant :

- une unité produisant de l'énergie calorifique (12), et
- une unité de stockage thermique (14) selon l'une quelconque des revendications précédentes et
- un dispositif de circulation(18) assurant

  - pendant une phase de charge, la circulation d'un fluide caloporteur de charge depuis l'unité produisant de l'énergie calorifique jusqu'à l'unité de stockage thermique, puis à travers ladite unité de stockage thermique, et
  - pendant une phase de décharge, une circulation d'un fluide caloporteur de décharge à travers ladite unité de stockage thermique,

au moins un desdits fluides caloporteurs de charge et de décharge, de préférence les deux fluides caloporteurs de charge et de décharge, circulant dans l'empilement depuis ledit conduit inférieur vers au moins un dit conduit supérieur.

**Patentansprüche**

1. Wärmespeichereinheit, umfassend:

   - einen Raum (41) mit Öffnungen (42; 44), die ein Zuführen und Entnehmen eines Wärmeträgermediums in den Raum zulassen, und
   - einen Stapel aus Formsteinen, die bevorzugt aus einem Material bestehen, dass eine Wärmekapazität bei 25°C von mehr als 600 J.°C$^{-1}$.kg$^{-1}$ aufweist, wobei die Formsteine in dem Raum in Form von übereinander liegenden Schichten (46; 46') angeordnet sind, wobei jede Schicht große Unterseiten (47a; 47a') und Oberseiten (47b; 47b') aufweist und eine Vielzahl von Kanälen (48; 48') definiert, von denen jeder durch untere Öffnungen (49a; 49a') und obere Öffnungen (49b; 49b') jeweils an den großen Unter- und Oberseiten münden,

   wobei der Stapel ein Schichtenpaar umfasst, das aus einer unteren Schicht (46) und einer oberen Schicht (46'), die über der unteren Schicht liegt, besteht, wobei das Schichtenpaar, "Schichtenpaar mit Durchlass" genannt, derart ist, dass:

   - die großen Oberseiten (47b) und Unterseiten (47a') der unteren Schicht und der oberen Schicht jeweils voneinander so bestandet sind, dass sie einen Durchlass (52) definieren, der eine obere Öffnung (49b) eines unteren Kanals (48) der unteren Schicht und mindestens eine untere Öffnung, die in Bezug auf die obere Öffnung (49b) vollständig versetzt ist, mindestens eines oberen Kanals der oberen Schicht in Fluidverbindung bringt,
   - wobei die große Unterseite (47a') der oberen Schicht die obere Öffnung (49b), "verschlossene obere Öffnung" genannt, zumindest teilweise verschließt, wenn die obere Öffnung (49b) entlang ihrer Achse von dem unteren Kanal (48) aus betrachtet wird,

   wobei die Formsteine so ausgebildet und angeordnet sind, dass der Stapel einen Hohlraumvolumenanteil von höchstens 60 % aufweist,
   wobei zahlenmäßig mehr als 20 % der oberen Öffnungen der unteren Schicht verschlossene obere Öffnungen sind,
   wobei zahlenmäßig mehr als 20 % der übereinander liegenden Schichtenpaare des Stapels jeweils ein Schichtenpaar mit Durchlass sind.

2. Wärmespeichereinheit nach dem unmittelbar vorhergehenden Anspruch, bei der zahlenmäßig mehr als 50 %, bevorzugt mehr als 70 %, bevorzugt mehr als 90 %, bevorzugt 100 % der übereinander liegenden Schichtenpaare des Stapels jeweils Schichtenpaare mit Durchlass bilden.

3. Wärmespeichereinheit nach einem der vorhergehenden Ansprüche, bei der bei mindestens einem Schichtenpaar mit Durchlass, bevorzugt bei jedem Schichtenpaar mit Durchlass, die Verschlussrate einer verschlossenen oberen Öffnung, bevorzugt jeder verschlossenen oberen Öffnung, mehr als 10 %, bevorzugt mehr als 90 % beträgt.

4. Wärmespeichereinheit nach einem der vorhergehenden Ansprüche, bei der bei mindestens einem Schichtenpaar mit Durchlass, bevorzugt bei jedem Schichtenpaar mit Durchlass, zahlenmäßig mehr als 95 % der oberen Öffnungen der unteren Schicht des Schichtenpaares mit Durchlass verschlossene obere Öffnungen sind.

5. Wärmespeichereinheit nach einem der vorhergehenden Ansprüche, bei der bei mindestens einem Schichtenpaar mit Durchlass, bevorzugt bei jedem Schichtenpaar mit Durchlass, zahlenmäßig mehr als 70 %, bevorzugt mehr als 95 % der verschlossenen oberen Öffnungen der unteren Kanäle der unteren Schicht des Schichtenpaares mit Durchlass gegenüber einer unteren Öffnung, "korrespondierende" genannt, eines oberen Kanals der oberen Schicht des Schichtenpaares mit Durchlass liegen, wobei das Verhältnis der Oberflächen einer verschlossenen oberen Öffnung und der korrespondieren unteren Öffnung größer als 0,1 und kleiner als 0,9 oder größer als 1,1 und kleiner als 10 ist.

6. Wärmespeichereinheit nach dem unmittelbar vorhergehenden Anspruch, bei der bei mindestens einem Schichtenpaar mit Durchlass, bevorzugt bei jedem Schichtenpaar mit Durchlass, zahlenmäßig mehr als 70 %, bevorzugt mehr als 95 % der verschlossenen oberen Öffnungen des Schichtenpaares mit Durchlass koaxial zu einer korrespondierenden unteren Öffnung sind.

7. Wärmespeichereinheit nach Anspruch 4, bei der bei mindestens einem Schichtenpaar mit Durchlass, bevorzugt bei jedem Schichtenpaar mit Durchlass, zahlenmäßig mehr als 70 %, bevorzugt mehr als 95 % der verschlossenen oberen Öffnungen des Schichtenpaares mit Durchlass nicht koaxial zu einer korrespondierenden unteren Öffnung sind.

8. Wärmespeichereinheit nach einem der Ansprüche 1 bis 3, bei der bei mindestens einem Schichtenpaar mit Durchlass, bevorzugt bei jedem Schichtenpaar mit Durchlass, die Verschlussrate der verschlossenen oberen Öffnung des Schichtenpaares mit Durchlass 100 % beträgt.

9. Wärmespeichereinheit nach einem der vorhergehenden Ansprüche, bei der bei mindestens einem Schichtenpaar mit Durchlass, bevorzugt bei jedem Schichtenpaar mit Durchlass, die große Oberseite des Schichtenpaares mit Durchlass der unteren Schicht eine untere Öffnung der oberen Schicht des Schichtenpaares mit Durchlass, "verschlossene untere Öffnung" genannt, zumindest teilweise verschließt, wenn die untere Öffnung entlang ihrer Achse von dem oberen Kanal aus betrachtet wird.

10. Wärmespeichereinheit nach dem unmittelbar vorhergehenden Anspruch, bei der bei mindestens einem Schichtenpaar mit Durchlass, bevorzugt bei jedem Schichtenpaar mit Durchlass, das Verhältnis der Anzahl der verschlossenen oberen Öffnungen des Schichtenpaares mit Durchlass zur Anzahl der verschlossenen unteren Öffnungen des Schichtenpaares mit Durchlass zwischen 0,7 und 1,3, bevorzugt zwischen 0,9 und 1,1 beträgt.

11. Wärmespeichereinheit nach einem der vorhergehenden Ansprüche, bei der sich bei mindestens einem Schichtenpaar mit Durchlass, bevorzugt bei jedem Schichtenpaar mit Durchlass, der Durchlass des Schichtenpaares mit Durchlass, bevorzugt jeder Durchlass, im Wesentlichen horizontal erstreckt.

12. Wärmespeichereinheit nach einem der vorhergehenden Ansprüche, bei der bei mindestens einem Schichtenpaar mit Durchlass, bevorzugt bei jedem Schichtenpaar mit Durchlass, die maximale Höhe ($H_{52}$) des Durchlasses des Schichtenpaares mit Durchlass größer als 1 mm und kleiner als 3 cm ist.

13. Wärmespeichereinheit nach einem der vorhergehenden Ansprüche, bei der bei mindestens einem Schichtenpaar mit Durchlass, bevorzugt bei jedem Schichtenpaar mit Durchlass, die mittlere Verschlussrate an dem Schichtenpaar mit Durchlass umso größer ist, je näher das Paar einem Ende des Stapels ist, wobei die Änderung Stufen über mehrere übereinander liegende Schichtenpaare mit Durchlass aufweisen kann.

14. Wärmespeichereinheit nach einem der vorhergehenden Ansprüche, wobei mehr als 5 % der Formsteine des Stapels jeweils ein "Lochstein" sind,

   - der durch eine Oberseite (70), eine Unterseite (55), die bevorzugt parallel zur Oberseite ist, und eine Seitenfläche (76), die sich, im Wesentlichen entlang eines virtuellen Zylinders, zwischen den Ober- und Unterseiten und bevorzugt senkrecht zu den Ober- und Unterseiten erstreckt, begrenzt wird, und
   - eine Lochung (66) umfasst, die den Lochstein durchquert und an den Ober- und Unterseiten mündet,

   wobei die Lochung und die Seitenfläche des Lochsteins so ausgebildet sind, dass in einem Schichtenpaar, das aus diesen Lochsteinen besteht, die in Form einer kompakten unteren Schicht (46) und einer über der unteren Schicht liegenden kompakten oberen Schicht (46') angeordnet sind, alle oder ein Teil der Grenzflächenlöcher (68) zwischen den Lochsteinen der unteren Schicht mit Lochungen von Lochsteinen der oberen Schicht korrespondieren und/oder alle oder ein Teil der Grenzflächenlöcher zwischen den Steinen der oberen Schicht mit Lochungen von Lochsteinen der unteren Schicht korrespondieren,
   wobei ein Grenzflächenloch einer Schicht ein Kanal ist, die zwischen den Formsteinen der Schicht ausgebildet ist und an großen Unterseiten (47a) und Oberseiten (47b) der Schicht mündet,
   wobei eine Korrespondenz zwischen einem Grenzflächenloch und einer Lochung einem teilweisen Verschluss mindestens einer der Öffnungen des Grenzflächenlochs und der gegenüber liegenden Lochung entspricht,
   wobei eine Schicht kompakt ist, wenn die sie bildenden Ziegel ein minimales Volumen einnehmen.

15. Wärmespeichereinheit nach dem vorhergehenden Anspruch, bei der die Grundfläche des Zylinders so ausgebildet ist, dass sie mehr als 70 % und weniger als 95 % der Fläche des kleinsten Quadrats einnimmt, in das sie einbeschrieben sein kann, und/oder der Lochstein einen Hohlraumvolumenanteil von höchstens 60 % und mindestens 10 % aufweist.

16. Wärmespeichereinheit nach einem der beiden unmittelbar vorhergehenden Ansprüche, bei der die Grundfläche des Zylinders achteckig ist und vier große paarweise parallele Kanten und vier kleine paarweise parallele Kanten aufweist, wobei jede kleine Kante benachbart zu zwei großen Kanten ist.

17. Wärmespeichereinheit nach einem der Ansprüche 1 bis 13, wobei mehr als 5 % der Formsteine des Stapels jeweils ein "Lochstein" sind,

- der durch eine Oberseite (70), eine Unterseite (55), die bevorzugt parallel zur Oberseite ist, und eine Seitenfläche (76), die sich, im Wesentlichen entlang eines virtuellen Zylinders, zwischen den Ober- und Unterseiten und bevorzugt senkrecht zu den Ober- und Unterseiten erstreckt, begrenzt wird, wobei der virtuelle Zylinder bevorzugt eine quadratische, sechseckige oder achteckige Grundfläche hat, und
- mehr als 20 Lochungen (66) aufweist, die den Lochstein durchqueren und an den Ober- und Unterseiten münden, und
- einen Hohlraumvolumenanteil von höchstens 60 % und mindestens 10 % aufweist,

wobei die Lochungen so ausgebildet und/oder verteilt sind und die Geometrie des Lochsteins so ausgebildet ist, dass in einem Schichtenpaar, das aus einer kompakten unteren Schicht (46) aus den Lochsteinen und aus einer über der unteren Schicht liegenden kompakten oberen Schicht (46') besteht, jeder Lochstein in mehreren Einsatzpositionen, bevorzugt 2, 3 oder 4, den gleichen Raum einnehmen kann, wobei die mittlere Verschlussrate der oberen Öffnungen der Lochungen jedes Lochsteins in Abhängigkeit von der eingenommenen Einsatzposition veränderlich ist.

18. Wärmespeichereinheit nach dem unmittelbar vorhergehenden Anspruch,

- in der zahlenmäßig mehr als 50 % der Lochungen jeweils einen mittleren äquivalenten Durchmesser von mehr als 5 mm und weniger als 25 mm aufweisen und/oder
- in der die Oberflächendichte von Lochungen an der oberen Oberfläche des Formsteins mehr als 1000, bevorzugt mehr als 1200, bevorzugt mehr als 1400 Lochungen je Quadratmeter beträgt.

19. Wärmespeichereinheit nach einem der Ansprüche 14 bis 18, wobei der Lochstein

- einen Fuß umfasst, der von der Oberseite oder Unterseite vorspringt, und eine Aufnahme an der Seite, die entgegengesetzt zu der den Fuß aufweisenden Seite liegt, so dass ein Fuß eines anderen identischen Formsteins in der Aufnahme aufgenommen werden kann, und/oder
- aus einem Material besteht, das die folgende chemische Analyse in Massenprozentanteilen aufweist:

- 25 % < $Fe_2O_3$ < 90 % und
- 5 % < $Al_2O_3$ < 30 % und
- CaO < 20 % und
- $TiO_2$ < 25% und
- 3 % < $SiO_2$ < 50 % und
- $Na_2O$ < 10 %,
vorausgesetzt, dass $Fe_2O_3$ + $Al_2O_3$ + CaO + $TiO_2$ + $SiO_2$ + $Na_2O$ > 80 %, bevorzugt > 85 % oder sogar > 90 % und
- Andere Oxide: Komplement zu 100 % und/oder

- eine Masse von mehr als 10 kg und weniger als 25 kg aufweist.

20. Thermische Anlage, umfassend:

- eine Wärmeenergie erzeugende Einheit (12) und
- eine Wärmespeichereinheit (14) nach einem der vorhergehenden Ansprüche und
- eine Zirkulationsvorrichtung (18), gewährleistend

- während einer Aufladephase das Strömen eines Auflade-Wärmeträgermediums von der Wärmeenergie erzeugenden Einheit bis zur Wärmespeichereinheit, dann durch die Wärmespeichereinheit hindurch, und
- während einer Entladephase ein Strömen eines Entlade-Wärmeträgermediums durch die Wärmespeichereinheit hindurch,

wobei mindestens eines der Auflade- und Entlade-Wärmeträgermedien, bevorzugt die beiden Auflade- und Entlade-Wärmeträgermedien in dem Stapel vom unteren Kanal zu mindestens einem oberen Kanal hin strömen.

**Claims**

1. Thermal storage unit comprising:

   - a receptacle (41) comprising orifices (42; 44) allowing a heat-transfer fluid to be introduced into and extracted from the said receptacle, and
   - a stack of bricks preferably made of a material which at 25°C has a specific heat capacity higher than 600 J.°C$^{-1}$.kg$^{-1}$, the said bricks being arranged in the said receptacle in the form of superposed strata (46; 46'), each stratum having lower (47a; 47a') and upper (47b; 47b') large faces and defining a plurality of ducts (48; 48') each opening via lower (49a; 49a') and upper (49b; 49b') openings onto the said lower and upper large faces respectively,

   the stack comprising a pair of strata made up of a lower stratum (46) and an upper stratum (46') which is superposed on the said lower stratum,
   the said pair of strata, referred to as "passage strata pair", being such that:

   - the upper (47b) and lower (47a') large faces of the said lower stratum and of the said upper stratum, respectively, are separated from one another in such a way as to define a passage (52) placing an upper opening (49b) of a lower duct (48) of the said lower stratum in fluidic communication with at least one lower opening, that is entirely offset with respect to the said upper opening (49b), of at least one upper duct of the said upper stratum,
   - the lower large face (47a') of the upper stratum closes off, at least in part, the said upper opening (49b), referred to as "closed-off upper opening", when the said upper opening (49b) is observed, along its axis, from the said lower duct (48),

   the said bricks being shaped and configured in such a way that the said stack has a void volume fraction less than or equal to 60%,
   more than 20% by number of the upper openings of the said lower stratum being closed-off upper openings,
   more than 20% by number of the pairs of superposed strata of the stack being each a said passage strata pair.

2. Thermal storage unit according to the immediately preceding claim, in which more than 50%, preferably more than 70%, preferably more than 90%, preferably 100% by number of the pairs of superposed strata of the stack each form passage strata pairs.

3. Thermal storage unit according to either one of the preceding claims, in which, for at least one passage strata pair, preferably for any passage strata pair, the degree of closure of closed-off upper opening, preferably of any closed-off upper opening, is greater than 10%, preferably greater than 90%.

4. Thermal storage unit according to any one of the preceding claims, in which for at least one passage strata pair, preferably for any passage strata pair, more than 95% by number of the upper openings of the lower stratum of the said passage strata pair are closed-off upper openings.

5. Thermal storage unit according to any one of the preceding claims, in which for at least one passage strata pair, preferably for any passage strata pair, more than 70%, preferably more than 95% by number of the closed-off upper openings of the lower ducts of the lower stratum of the said passage strata pair face a lower opening, referred to as a "corresponding" opening, of an upper duct of the upper stratum of the said passage strata pair, the ratio of surface areas of a closed-off upper opening and of the said corresponding lower opening being greater than 0.1 and less than 0.9, or greater than 1.1 and less than 10.

6. Thermal storage unit according to any one of the preceding claims, in which for at least one passage strata pair, preferably for any passage strata pair, more than 70%, preferably more than 95% by number of the closed-off upper openings of the said passage strata pair are coaxial with a corresponding lower opening.

7. Thermal storage unit according to claim 4, in which for at least one passage strata pair, preferably for any passage strata pair, more than 70%, preferably more than 95% by number of the closed-off upper openings of the said passage strata pair are not coaxial with a corresponding lower opening.

8. Thermal storage unit according to any one of claims 1 to 3, in which for at least one passage strata pair, preferably for any passage strata pair, the degree of closure of the said closed-off upper opening of the said passage strata pair is 100%.

9. Thermal storage unit according to any one of the preceding claims, in which for at least one passage strata pair, preferably for any passage strata pair, the upper large face of the said passage strata pair of the lower stratum closes off, at least in part, a lower opening of the upper stratum of the said passage strata pair, referred to as a "closed-off lower opening", when the said lower opening is observed, along its axis, from the said upper duct.

10. Thermal storage unit according to the immediately preceding claim, in which for at least one passage strata pair, preferably for any passage strata pair, the ratio of the number of closed-off upper openings of the said passage strata pair to the number of closed-off lower openings of the said passage strata pair is between 0.7 and 1.3, preferably between 0.9 and 1.1.

11. Thermal storage unit according to any one of the preceding claims, in which for at least one passage strata pair, preferably for any passage strata pair, the passage of the said passage strata pair, preferably any passage, extends substantially horizontally.

12. Thermal storage unit according to any one of the preceding claims, in which for at least one passage strata pair, preferably for any passage strata pair, the maximum height ($H_{52}$) of the passage of the said passage strata pair is greater than 1 mm and less than 3 cm.

13. Thermal storage unit according to any one of the preceding claims, in which for at least one passage strata pair, preferably for any passage strata pair, the closer the said pair is to one end of the stack, the greater on average is the degree of closure across the said passage strata pair, it being possible for the variation to exhibit stepped levels across various superposed passage strata pairs.

14. Thermal storage unit according to any one of the preceding claims, more than 5% of the bricks of the stack each being a "perforated brick"

- delimited by an upper face (70), a lower face (55), preferably parallel to the said upper face, and a lateral surface (76) extending, substantially as a virtual cylinder, between the said upper and lower faces and preferably perpendicular to the said upper and lower faces, and
- comprising a perforation (66) passing through the said perforated brick and opening onto the said upper and lower faces,

the perforation and the lateral surface of the perforated brick being shaped in such a way that, in a strata pair made up of said perforated bricks configured in the form of a compact lower stratum (46) and of a compact upper stratum (46') superposed on the said lower stratum, all or some of the interfacial holes (68) at the interface between the perforated bricks of the lower stratum correspond with perforations of perforated bricks of the upper stratum, and/or all or some of the interfacial holes at the interface between the bricks of the upper stratum correspond with perforations of perforated bricks of the lower stratum,
an interfacial hole of a stratum being a duct formed between the bricks of the said stratum and opening onto lower (47a) and upper (47b) large faces of the said stratum, correspondence between an interfacial hole and a perforation corresponding to a partial closing-off of at least one of the openings of the interfacial hole and of the perforation opposite,
a stratum being compact when the bricks of which it is made up occupy a minimal volume.

15. Thermal storage unit according to the preceding claim, in which the base of the cylinder is shaped to occupy more than 70% and less than 95% of the surface area of the smallest square in which it can be inscribed, and/or having a void volume fraction less than or equal to 60% and greater than or equal to 10%.

16. Thermal storage unit according to either one of the two immediately preceding claims, in which the base of the cylinder is octagonal and has four long sides parallel in pairs and four short sides parallel in pairs, each short side being adjacent to two long sides.

17. Thermal storage unit according to any one of Claims 1 to 13, more than 5% of the bricks of the stack each being a "perforated brick"

- delimited by an upper face (70), a lower face (55), preferably parallel to the said upper face, and a lateral surface (76) extending, substantially as a virtual cylinder, between the said upper and lower faces and preferably perpendicular to the said upper and lower faces, the said virtual cylinder preferably having a base of square, hexagonal or octagonal shape, and

- comprising more than 20 perforations (66) passing through the said perforated brick and opening onto the said upper and lower faces, and

- having a void volume fraction less than or equal to 60% and greater than or equal to 10%,

the perforations being shaped and/or distributed and the geometry of the perforated brick being shaped in such a way that, in a strata pair made up of a compact lower stratum (46) made up of said perforated bricks and of a compact upper stratum (46') superposed on the said lower stratum, each said perforated brick can occupy the same space in several operational positions, preferably 2, 3 or 4 positions, the mean degree of closure of the upper openings of the perforations of each said perforated brick being able to vary according to the operational position adopted.

18. Thermal storage unit according to the immediately preceding claim,

- in which more than 50% by number of the perforations each have a mean equivalent diameter greater than 5 mm and less than 25 mm, and/or

- in which the surface density of perforations at the upper surface of the brick is greater than 1000, preferably greater than 1200, preferably greater than 1400 perforations per square metre.

19. Thermal storage unit according to any one of Claims 14 to 18, the said perforated brick

- comprising a foot protruding from the said upper face or from the said lower face, and a housing on the opposite face to the face that has the foot, so that a foot of another identical brick can be housed in the said housing; and/or

- being made of a material that exhibits the following chemical analysis, in percentage by mass:

- $25\% < Fe_2O_3 < 90\%$, and
- $5\% < Al_2O_3 < 30\%$, and
- $CaO < 20\%$, and
- $TiO_2 < 25\%$, and
- $3\% < SiO_2 < 50\%$, and
- $Na_2O < 10\%$,

provided that $Fe_2O_3 + Al_2O_3 + CaO + TiO_2 + SiO_2 + Na_2O > 80\%$, preferably $> 85\%$, or even $> 90\%$, and
- other oxides: balanced to 100%, and/or

- having a mass greater than 10 kg and less than 25 kg.

20. Thermal installation comprising:

- a unit producing heat energy (12), and
- a thermal storage unit (14) according to any one of the preceding claims, and
- a circulation device (18) which:

- during a charging phase, causes a charging heat-transfer fluid to circulate from the unit producing heat energy to the thermal storage unit, then through the said thermal storage unit, and
- during a discharging phase, causes a discharging heat-transfer fluid to circulate through the said thermal storage unit,

at least one of the said charging and discharging heat-transfer fluids, preferably both the charging and the discharging heat-transfer fluid, circulating in the stack from the said lower duct towards at least one said upper duct.

Fig. 1

Fig. 2

66

49a'
49b
57
48'
54
72
55
48

48'
$H_{52}$
48

49b
$A_{com}$
$A_{proj}$

$A_{com}$
$A_{proj}$
49b

Fig. 3a          Fig. 3b

55

48
52
57
48'

$A_{com}$
$A_{proj}$
49b

Fig. 3c

48'
48
$A_{com}$
$A_{proj}$
49b
49'a

Fig. 3d

48
$A_{proj}$
49b

Fig. 3e

48'
49a'
49b'
50'
70
47b'
46'
47a'
47b
52
57
49b
48
46
47a
49a
55
54

Fig. 4a

X
72
46s
P
46i
76
76a
76b
H₄₀

Fig. 4b

A₁
A₂
C
A₃
48
A₄
68
66
L₄₀
l₄₀

Fig. 4c

C
B
64

Fig. 5

Fig. 6

Fig. 7

Fig. 8

Fig. 9

Fig. 10

Fig. 11

Fig. 12

Fig. 13

Fig. 14

$57_1$    $57_2$    Fig. 15

**RÉFÉRENCES CITÉES DANS LA DESCRIPTION**

**Documents brevets cités dans la description**

- US 2014000835 A

**Littérature non-brevet citée dans la description**

- A review on packed bed solar energy storage systems. *Renewable and Sustainable Energy Reviews,* 2010, vol. 14, 1059-1069